(19) Europäisches Patentamt
European Patent Office
Office européen des brevets

(11) **EP 4 190 846 A1**

(12) **EUROPEAN PATENT APPLICATION**
published in accordance with Art. 153(4) EPC

(43) Date of publication:
**07.06.2023 Bulletin 2023/23**

(21) Application number: **21850416.5**

(22) Date of filing: **29.07.2021**

(51) International Patent Classification (IPC):
$C08J\ 7/048$ (2020.01)       $C08J\ 5/18$ (2006.01)
$C08L\ 3/00$ (2006.01)       $C09D\ 101/02$ (2006.01)
$C09D\ 103/02$ (2006.01)     $B32B\ 27/12$ (2006.01)
$D21H\ 19/34$ (2006.01)

(52) Cooperative Patent Classification (CPC):
**B32B 27/12; C08J 5/18; C08J 7/048; C08L 3/00;
C09D 101/02; C09D 103/02; D21H 19/34**

(86) International application number:
**PCT/BR2021/050319**

(87) International publication number:
**WO 2022/020928 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2020 BR 102020015501**

(71) Applicants:
• **Suzano S.A.**
**41810-012 Pituba, Salvador, BA (BR)**
• **Fundaçaõ Universidade Federal De Saõ Carlos
- UFSCAR**
**CEP-13565-905 Saõ Carlos-SP (BR)**

(72) Inventors:
• **SIQUEIRA, Germano Andrade**
**12240-681 São José dos Campos - SP (BR)**
• **VIEIRA, Richieli Teles**
**06036-048 Osasco - SP (BR)**
• **DE LIMA, Vitor Hugo**
**18060-630 Sorocaba - SP (BR)**
• **LUCAS, Alessandra De Almeida**
**13562-330 São Carlos - SP (BR)**
• **MOREIRA, Francys Kley Vieira**
**13560-270 São Carlos - SP (BR)**
• **URUEÑA, Gustavo Adolfo Duarte**
**13566-538 São Carlos - SP (BR)**

(74) Representative: **Aera A/S**
**Niels Hemmingsens Gade 10, 5th Floor
1153 Copenhagen K (DK)**

(54) **BARRIER COMPOSITION, USE AND PRODUCTION METHOD THEREOF, STRUCTURES, USE AND PRODUCTION METHOD THEREOF**

(57) The present disclosure relates to a barrier composition comprising a modified or unmodified starch, a plasticizer, and an MFC, and to a method for producing the barrier composition and the use thereof, such as in a multi-layer structure comprising the barrier composition and a carrier layer. Methods for producing a multi-layer structure comprising a barrier composition are also disclosed and can be applied in order to obtain an article that comprises the multi-layer structure.

FIGURE 1

**Description**

**TECHNICAL FIELD OF THE INVENTION**

The present invention relates to a barrier composition comprising a modified or unmodified starch, a plasticizer, an MFC (microfibrillated cellulose), and to a method of producing the barrier composition and its application, such as in a multi-layer structure comprising the composition barrier and a layer carrier. Methods of producing a multi-layer structure comprising a barrier composition are also disclosed, and it can be applied to obtain an article comprising the multi-layer structure.

**BACKGROUND OF THE INVENTION**

In several types of packaging, it is desirable that the packaging allows the lowest possible transmission of oxygen. For such purposes, high gas barrier materials such as nylon, ethylene/vinyl alcohol, or polyvinylidene chloride film or coatings can be used.

Such packages generally use laminates of two or more sheets or films of polymeric material. The sheets or films forming the laminates can be of the same or varied materials. Packaging materials to which the present invention is directed include, but are not limited to, a barrier composition comprising a modified or unmodified starch, a plasticizer, and an MFC.

The patent document WO2017163167, entitled "Oxygen barrier film and laminate and methods of manufacturing the same," presents the production of multi-layer films with oxygen barrier properties, one of the layers being a film formed by depositing a suspension of microfibrillated cellulose directly on the polymer substrate, and performing the subsequent drying process, or previously forming the film (nanopaper) and applying it directly as a layer. In a different way from this art, the present invention presents the deposition of a suspension of microfibrillated cellulose in a solution of modified or unmodified starch and glycerol, in which it may also contain montmorillonite clay, whose advantages reside in the additional barrier properties of the modified or unmodified starch and clay. Flexibility and adhesion are further improved, and the pores that eventually are formed are filled by modified or unmodified starch and glycerol or by modified or unmodified starch, glycerol and clay.

The document US20190234020, entitled "Microfibrillated film," presents a film formation technology based on microfibrillated cellulose, in which a forming agent (anionic polyacrylamide) is added together with the MFC to promote better film formation. Unlike the cited document, the present invention uses glycerol and modified or unmodified starch as facilitators of film formation based on microfibrillated cellulose, with the technical advantage of using glycerol and limited or unmodified starch as facilitators, which advantageously avoids the toxicity of acrylamide monomers that form the polyacrylamide. In addition, the disposal of polyacrylamide must be controlled due to its high solubility in water, contaminating the environment. Modified or unmodified starch and glycerol fill any pores formed, improving the film's mechanical properties.

**BRIEF DESCRIPTION OF THE INVENTION**

The present invention relates to a barrier composition comprising a modified or unmodified starch, a plasticizer, and an MFC, as well as to a method of producing the barrier composition and its application, such as in a multi-layer structure comprising the barrier composition and a layer carrier. Methods of producing a multi-layer structure comprising a barrier composition are also disclosed and it can be applied to obtain an article comprising the multi-layer structure.

**BRIEF DESCRIPTION OF THE FIGURES**

Figure 1 is an overview of the pilot Table Topp Tape Caster (TTC) lamination unit. (1) Mandrel for fitting plastic substrate coil. (2) Laminating device. (3) Lamination unit drying zone. (4) Mandrel for winding the plastic substrate. (5) laminating unit control panel. (6) Warm air ejection system. (7) Exhaust fan.

Figure 2 is an image of the TTC pilot unit laminating device. (A) The rolling device's side and front view, highlighting the trough, rolling knife, and graduated drums. (B) Illustration of the formation of the wet sheet of modified or unmodified starch + MFC solution on the mobile plastic substrate (BOPP and LLDPE).

Figure 3 is an image of drying the modified or unmodified starch solution wet sheet and MFC in the TTC pilot unit.

Figure 4 is an image of the layer deposited during the drying process.

Figure 5 is a top view of winding the multi-layer film in the TTC pilot unit.

Figures 6-8 show the distribution of Transmittance, Haze (opacity), and Clarity properties of LLDPE/0.02; LLDPE/poly(vinylidene chloride) (PVDC)/ethylene vinyl alcohol copolymer (EVOH)/0.05 films, coated with AM10/GOH20 and AM10/GOH20/MFC in a thickness of (a) 0.01 mm (b) 0.02mm and (c) 0.05mm.

Figures 9-11 illustrate the distribution of Transmittance, Haze, and Clarity properties of BOPP/0.02 films coated with AM10/GOH20 and AM10/GOH20/MFC at a thickness of (a) 0.01mm (b) 0.02 mm (c) 0.05 mm.

Figure 12 illustrates the distribution of Transmittance, Haze, and Clarity properties of LLDPE/0.02 films coated with AM10/GOH20/MFC2/MMT1 and MMT2 at a thickness of 0.02mm. (a) LLDPE/0.02, (b)MMT1 and (c)MMT2.

Figure 13 illustrates the distribution of Transmittance, Haze, and Clarity properties of BOPP/0.02 films coated with AM10/GOH20/MFC2/MMT1 and MMT2 at a thickness of 0.02mm. (a)BOPP/0.02, (b)MMT1 and (c)MMT2.

Figure 14 illustrates specimens during uniaxial tensile testing.

Figure 15 illustrates Tension x Deformation curves for LLDPE/0.02mm samples.

Figure 16 illustrates Stress x Strain curves for BOPP/0.02mm samples.

Figure 17 shows micrographs of BOPP/AM10/GOH20/MFC where (A)MFC 1%, (B)MFC 2%, and (C) MFC 3% at 500x magnification.

Figure 18 shows micrographs of LLDPE/AM10/GOH20/MFC where (A)MFC 1%, (B)MFC 2%, and (C) MFC 3% at 500x magnification.

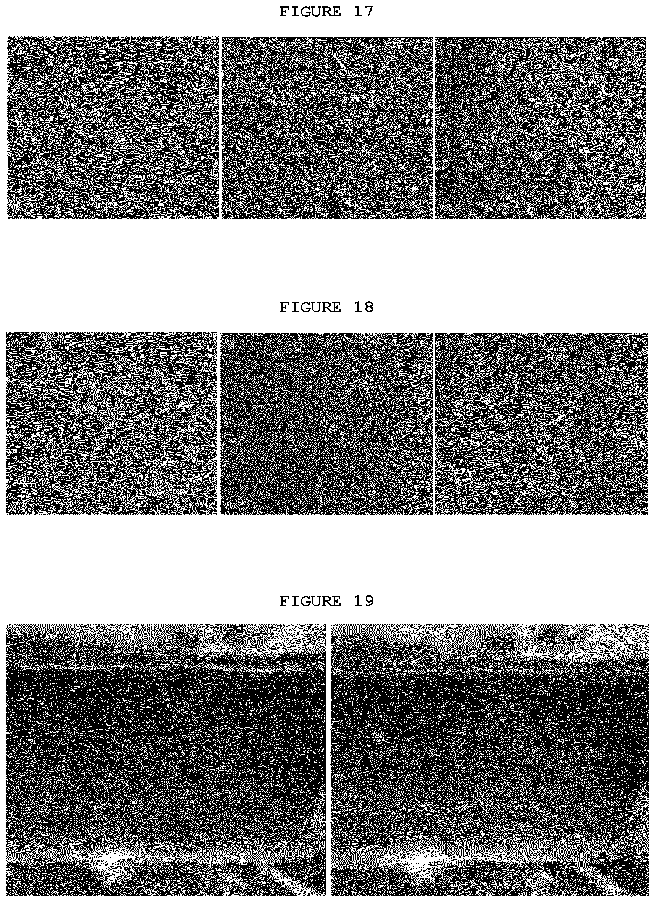

Figures 17 and 18 show the surfaces for BOPP and LLDPE films, respectively, coated with AM10/GOH20/MFC, with the percentages of MFC varying from 1 to 3%, as observed in (A), (B), and (C).

Figure 19 shows cross-sectional micrographs of the LLDPE/AM10/GOH20/MFC fracture, where (A)MFC 2% and (B) MFC 3% at 10,000x magnification.

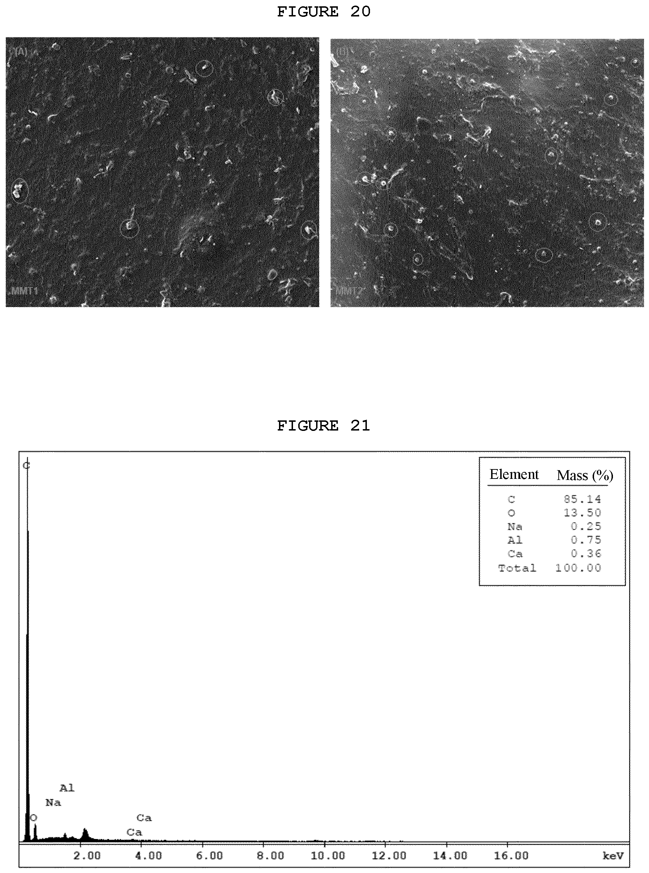

Figure 20 shows LLDPE/AM10/GOH20/MFC2/MMT micrographs where (A)MMT 1% and (B)MMT 2% at 250x magnification.

Figure 20 shows micrographs obtained for samples coated with AM/GOH/MFC/MMT suspension.

Figure 21 presents Energy Dispersive Spectroscopy - EDS results for AM/GOH/MFC/MMT sample in order to quantify MMT in the coating layer.

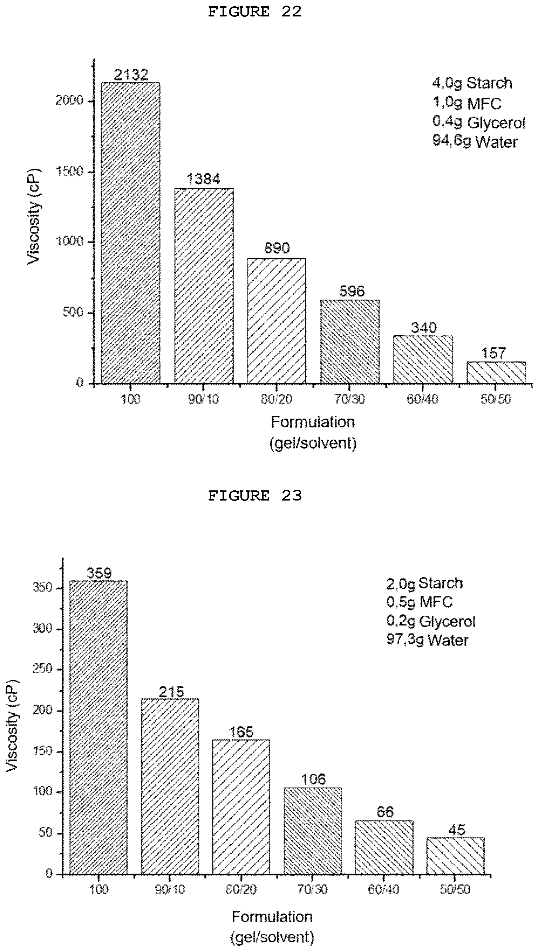

Figures 22-23 show the viscosity variation of the two formulations, in which both have 25% by weight of MFC concerning the starch, but are diluted in different amounts of solvent, according to the gel/solvent ratio.

## DETAILED DESCRIPTION OF THE INVENTION

The present invention relates to a barrier composition comprising a modified or unmodified starch, a plasticizer, and an MFC, as well as to a method of producing the barrier composition and its application, such as in a multi-layer structure comprising the barrier composition and a layer carrier. Methods of making a multi-layer structure comprising a barrier composition are also disclosed and it can be applied to obtain an article comprising the multi-layer structure.

Modified or unmodified starch is a low-cost ingredient and it has been investigated in the literature as a material with good $O_2$ barrier properties, although it has the same sensitivity to water absorption as cellulose.

Modified or unmodified starch comprises two natural polymers: amylose and amylopectin. Amylose is a polymer with an essentially linear structure formed by D-glucose units linked by $\alpha$-(1→4) bonds. Amylopectin is a polymer with a branched structure that, in addition to being formed by $\alpha$-(1→4) bonds, $\alpha$-(1→6) bonds at branching points. The ratio of amylose to amylopectin depends on the botanical source of the modified or unmodified starch (cassava, corn, potato, wheat, etc.). In general, amylopectin is the main constituent of modified or unmodified starch. Examples of suitable modified or unmodified starch sources are mung bean, water chestnut, sweet potato, waxy corn, cassava, potato, wheat and corn, purple yam, sorghum, fava bean, rice, avocado pit, bamboo, babassu coconut, among others.

Modified or unmodified starch appears as a powder of semi-crystalline microscopic granules of varying morphology and size that also depend on the botanical source. Furthermore, these granules can be disstructured to convert modified or unmodified starch into biodegradable formulations such as glues, gels, and films. The disstructuring process of modified or unmodified starch is carried out by heating with mechanical agitation, shearing or plasticizing additives, and water.

The present invention comprises a plasticizer. The suitable plasticizer can be selected from glycerol, 1-ethyl 3-methylimidazolium acetate, sorbitol, triethylene glycol, glucose, urea, yerba mate extract, diethyl phthalate, n,n bis (2-hydroxyethyl) formamide, poly(vinyl alcohol), xylitol, or mixtures thereof. Preferably, the plasticizer is a glycerol.

Microfibrillated cellulose (MFC), also known as nano-fibrillated cellulose, is the term used to describe a material composed of cellulose microfibrils (or cellulose nanofibrils) that can be isolated from broken and disentangled cellulose containing primary or secondary plant cells or pellicle (in the case of bacterial cellulose). These cellulose microfibrils typically have a diameter of 3-70 nanometers (it can reach a few hundred nanometers) and a length that can vary over a wide range, but usually measures several micrometres. Aqueous MFC suspensions are pseudoplastic and exhibit a property that is also observed in certain gels or thick (viscous) fluids, i.e., they are thick (viscous) under normal conditions but they flow (become thin, less viscous) over time when agitated, agitated or stressed. This property is known as thixotropy. MFC can be obtained and isolated from a cellulose-containing source through homogenization, milling, high-pressure and high-temperature, high-speed impact microfluidization, or refining.

Any type microfibrillated cellulose (MFC) can be used in the present invention. Accordingly, there is no specific restriction regarding the origin of the cellulose and, therefore, of the microfibrillated cellulose. The raw material for the cellulose microfibrils can be any cellulosic material, in particular wood, annuals plants, cotton, flax, straw, ramie, bagasse (from sugar cane), suitable seaweed, jute, sugar beet, citrus fruits, waste from the food processing industry or energy crops or cellulose of bacterial or animal origin, for example from tunicates. Preferably, cellulose obtained from wood is used as raw material, either from conifers, hardwoods, or both (in mixtures). Further, hardwood is preferably used as a raw material of one type or a mixture of diverse types of softwood.

A chemical modification of the surface of the cellulose microfibrils can also be applied, achieved by various possible reactions of the functional groups on the surface of the cellulose microfibrils and, more particularly, of the hydroxyl functional groups, preferably by: oxidation, silylation reactions, etherification reactions, condensations with isocyanates, alkoxylation reactions with alkylene oxides or condensation or substitution reactions with glycidyl derivatives. Chemical modification can occur before or after the defibrillation step.

A first embodiment of the present invention is a barrier composition comprising at least one modified or unmodified starch, 10-30% by weight of plasticizer based on the mass of modified or unmodified starch and 1.1-25.0% by weight of MFC, preferably 1.1-3.9% by weight of MFC, based on the mass of modified or unmodified starch.

In one aspect, the barrier composition can comprise from 0.1-5.0% by weight of a clay, based on the mass of modified or unmodified starch, selected from bentonite, halloysite, vermiculite, kaolin, aluminosilicates, and montmorillonite, preferably montmorillonite.

A second embodiment of the present invention is a barrier composition comprising 75-90% by weight of modified or unmodified starch, based on the total mass of the composition, 9-22.4% by weight of a plasticizer, based on the total mass of the composition and 0.9-2.9% by weight of MFC, based on the total mass of the composition.

And one aspect, the barrier composition, according to the present invention, can further comprise 0.9-1.5% by weight of clay, based on the total mass of the composition, selected from bentonite, halloysite, vermiculite, kaolin, aluminosilicates, and montmorillonite, preferably a montmorillonite.

One embodiment of the present invention is a method of producing a barrier composition, comprising:

a) Providing an aqueous dispersion of modified or unmodified starch, plasticizer, and MFC comprising 10-20% by weight of modified or unmodified starch, based on the total mass of solution, 0.9-4.7% by weight of plasticizer, based on the total mass of solution and 1.0-3.1% by weight of MFC based on the total mass of solution;

b1) Homogenizing the aqueous dispersion of modified or unmodified starch, plasticizer, and MFC by stirring;

b2) Heating the aqueous dispersion of modified or unmodified starch, plasticizer, and MFC to 80-85°C for one hour;

c) Cooling the aqueous dispersion of modified or unmodified starch, plasticizer, and MFC under stirring to room temperature;

d) Optionally, adding water to correct the initial value of the solution as measured before heating.

It should be noted that steps b1) of homogenizing the aqueous dispersion of modified or unmodified starch, plasticizer, and MFC by stirring and b2) of heating the aqueous dispersion of modified or unmodified starch, plasticizer, and MFC to 80-85°C by one hour can occur separately, or concurrently. When concomitant, homogenization can occur at the same time as the heating, it can be shorter, and even happen intermittently throughout the heating period.

By way of example, an aqueous dispersion of modified or unmodified starch is provided, followed by the addition of a plasticizer. Then, the mixture is stirred and heated for about 1 hour at 80-85°C. After homogenization, the solution is cooled and, optionally, the amount of water is corrected to the initial values, to maintain the proportion of 75-90 of modified or unmodified starch, 9.0-22.4% of plasticizer, and 0 .9-2.9% of MFC, based on the total mass of the composition.

Further, it should be appreciated that the term dispersion is used generically and it encompasses both, the dispersion of water-insoluble matter and the dissolution of water-soluble matter. In this way, the MFC can be in the form of a pre-dispersion when introduced into the aqueous dispersion of modified or unmodified starch and plasticizer. In this case, the water used to produce the pre-dispersion is deducted from the total water in the composition. As an example, if 100% of water is used in the total composition, 45% of water can be used to form the pre-dispersion, which is added to the aqueous dispersion composition of modified or unmodified starch and plasticizer already comprising 55% of the final amount of water of the aqueous dispersion of modified or unmodified starch, plasticizer, and MFC.

Accordingly, the barrier composition of the present invention can be used in the manufacturing or production of a multi-layer structure. In this regard, the present invention also uses a barrier composition in a multi-layer structure. In one aspect, the multi-layer structure is a film laminated to form a flexible package for holding a product, which may be an oxygen-sensitive product.

Accordingly, the method of producing a barrier composition according to the present invention may comprise, in step a), additionally 0.1-5% of a clay, preferably montmorillonite.

A fourth embodiment of the present invention is a multi-layer structure comprising a barrier composition, characterized in that it comprises:

a) a carrier layer selected from the group consisting of polymers, composites, metals, alloys, glass, silicon, ceramics, wood, and paper; and

b) a layer of plasticizer and MFC-based barrier composition disposed on at least a portion of the first layer, wherein the barrier composition comprises:

i. a modified or unmodified starch,

ii. a plasticizer, and

iii. an MFC.

The barrier composition of the multi-layer structure comprising a barrier composition may contain 70-90% by weight of modified or unmodified starch, 10-30% by weight of plasticizer based on the mass of modified or unmodified starch, and 0.1 - 10% by weight of MFC based on the mass of modified or unmodified starch. Furthermore, the barrier composition may comprise 0.1-5% by weight of a clay based on the modified or unmodified starch, preferably montmorillonite.

When the carrier layer of the multi-layer structure comprises a polymer, it may be selected from a bioriented polypropylene (BOPP), a low-density polyethylene (LDPE), a linear low-density polymer (LLDPE), high-density polyethylene (HDPE), polyamide (PA), polyethylene terephthalate (PET), polylactic acid (PLA), polybutylene terephthalate (PBT), polybutylene succinate (PBS), polybutylene succinate adipate (PBSA), polycaprolactone (PCL), polyhydroxybutyrate (PHB), poly(hydroxybutyrate-co-valerate) (PHBV), their blends, composites and nanocomposites or combinations thereof, being multi-layers or mixtures.

Accordingly, the multi-layer structure of the present invention can be used in the manufacturing or production of a package. In this regard, the present invention also uses a multi-layer structure in a package. In one aspect, when used in packaging, the multi-layer structure allows the packaging of a product, wherein it may be an oxygen-sensitive product.

A fifth embodiment of the present invention is a method of producing a multi-layer structure comprising a barrier composition, characterized in that it comprises:

a) Providing a carrier layer selected from the group consisting of polymers, composites, metals, alloys, glass, silicon, ceramics, wood, and paper; and

b) Depositing on the face of the carrier layer, a layer of barrier composition based on modified or unmodified starch, plasticizer and MFC, arranged in at least a portion of the first layer, in which the barrier composition comprises:

> i. a modified or unmodified starch,

> ii. a plasticizer and

> ii. an MFC.

c) Drying the multi-layer, resulting in a multi-layer structure.

Optionally, the composition of the barrier layer based on modified or unmodified starch, plasticizer, and MFC may also contain clay, preferably montmorillonite.

Accordingly, the barrier composition of the method of producing a multi-layer structure, the object of the present invention, comprises 75-90% by weight of modified or unmodified starch, based on the mass of the total composition, 9-22.4% by weight of plasticizer, based on the total mass of the composition and 0.9-2.0% MFC by weight, based on the total mass of the composition. Furthermore, the barrier composition may comprise 0.9-1.5% by weight of a clay, preferably montmorillonite.

Preferably, the face of the carrier layer is subjected to a corona treatment before deposition of the barrier composition layer based on modified or unmodified starch, plasticizer, and MFC.

There are several methods of depositing the barrier composition on the carrier layer. It is known that the production of multi-layer films and, later, the production of multi-layer packages involves different processes, and these can often be combined to allow the combination of varied materials to reach the final structure of the packages concerning the desired properties. For example, production processes for obtaining suitable multi-layer films are: extrusion, co-extrusion, lamination, lamination combined with extrusion, coating and/or deposition of layers from solutions or suspensions in liquid medium (coatings), flexography, and rotogravure.

For example, the extrusion process involves heating and melting the plastic material in a specific equipment that will direct the molten plastic to a matrix where, after being cooled, the desired profile will be obtained, such as film, sheet, tube, etc. In order to obtain a multi-layer structure, it is necessary that other materials be combined via extrusion. In this case, the process is known as co-extrusion, which consists of the simultaneous processing of two or more different plastics, which are heated and melted separately. The castings are combined in the matrix as a specific product, obtaining the multi-layer plastic film. The two methods for extruding multi-layer films are flat film extrusion and tubular film extrusion (blow).

In the case of flat film extrusion, the multi-layer casting takes on a film shape after passing through the slit-type die and subsequent cooling and winding.

In this process, there are three extruders that process the different plastic granules to produce a film or sheet. For example, if "A," "B," and "C" plastics are used, the film or sheet may have an ACBCA structure. For example, "A" could be LDPE, "C" an adhesive layer, and "B" EVOH. For example, castings "A" and "C" can be first split (so that each can form two separate layers) and then joined together with casting "B" in a combination adapter or power block.

Another flat film extrusion configuration can be given after the casting exits the extruder, the materials are cooled via blowing and directed to a set of rollers that mold the material to obtain a film.

In the tubular film co-extrusion technique, two or more resins are extruded through a matrix, with the castings being brought together immediately before exiting the ringshaped matrix. The molten mass is internally inflated by blowing air, pulled up to several meters in height, and shaped using two rollers. The distance between the rollers closes the system so that air pressure can be applied inside and blow the material into a giant bubble. At the same time, the bubble is cooled by blowing air out of the bubble or "tube." The film thickness is controlled by the expansion ratio, i.e., the bubble width compared to the matrix diameter, and by the pulling speed of the rollers. The bubble collapses on the narrowing of the rollers and it is then processed in the same way as a monolayer film. It is known that films with up to eleven layers can be made using the tubular film extrusion technique, by blowing, according to the manufacturers. As the resins remain separate until just before exiting the matrix, it is less crucial to combine the rheology of the resins than in the flat film extrusion process.

Lamination

Co-extrusion can combine two or more layers of plastics, starting with them in granule form. A lamination process is required to combine two or more materials when one of them is already pre-formed as a film and it will then serve as a substrate, possibly including non-plastic materials such as aluminum. Two examples of lamination will be cited to obtain multi-layers: extrusion and adhesive.

In extrusion lamination, the molten polymer is extruded in a flat film format between the two substrates to be combined. The three layers are then pressed against a cooling roller, and the extruded polymer in the form of films solidifies, binding all the layers together. After trimming the edges, the laminate is rolled.

For faster production times and plastic film-based structures (including aluminum laminates), adhesive lamination is often used. In this type of lamination, a solvent- or water-based adhesive coating is applied to a first substrate, and then this coated substrate is passed through an oven where warm air is blown to dry the solvent or water.

On exiting the oven, the adhesive is dry due to the removal of the solvent, so a heated pressing roller is used to bond it to the secondary network. The resulting laminate is cooled on a cooling roll to increase the adhesive viscosity, hence the name "dry bond lamination," which is then rolled under pressure to minimize the chance of the webs separating.

Continuous casting

Various coatings are used in multi-layer packaging to provide specific functional properties. Many are applied from aqueous dispersions, which are dried and coalesced to form a thin film. These coatings can have distinct functions, such as, for example, mechanically protecting the packaging structure, barrier agent according to the material being deposited and its properties, adhesive agent to facilitate the interaction between two layers with different adhesion properties, among others. This process comes closest to what we have used in the project to manufacture the initial prototypes, which is called continuous casting.

Preferably, the continuous casting coating is used in the method of producing a multi-layer structure, the object of the present invention.

A sixth embodiment of the present invention is an article, characterized in that it comprises the multi-layer structure consisting of a barrier composition, according to the present invention, characterized in that the article is a film, a sheet, a coating, a molded or shaped article, a layer in a multi-layer laminate, filament, fiber, yarn, fabric, garment or nonwoven fabric and wherein the multi-layer structure comprising a barrier composition provides an $O_2$ permeation barrier to a product.

A sixth embodiment of the present invention is an $O_2$ impermeable structure comprising two or more layers, wherein at least one of the layers is a layer comprising an $O_2$ permeation barrier composition comprising a modified or unmodified starch, plasticizer, and an MFC.

EXPERIMENTAL TESTS

Plastic film coatings were prepared with layers of modified or unmodified starch, microfibrillated cellulose (MFC), and montmorillonite clay (MMT).

The specific objective of the step: Evaluating the ideal adhesion condition between layers of modified or unmodified starch/MFC and modified or unmodified starch/MFC/MMT to plastic films of bioriented polypropylene (BOPP) and linear low-density polyethylene (LLDPE).

Materials

It was used (i) microfibrillated cellulose suspension (MFC); (ii) cassava starch type 1 (source of modified or unmodified starch); (iii) montmorillonite clay mineral (MMT), (iv) plasticizer with 99.5% purity; (v) linear low-density polyethylene (LLDPE) and bioriented polypropylene (BOPP) films, both with a thickness of 20 um.

Experimental procedures

Preparation of modified or unmodified starch solution

Aqueous solutions of modified or unmodified cassava starch were prepared at a concentration of 10% on a mass basis (m/m) in relation to the total mass of the solution. 300 g of deionized water was added to a 500 mL beaker. 30 g of modified or unmodified starch (without prior drying) was added to this amount of water and the set was placed under constant stirring for 5 min for homogenization at room temperature. The mixture was heated to 80-85 °C and maintained under heating with intense stirring for one hour to effect solubilization of the modified or unmodified starch. A water bath with a plasticizer was used throughout the process. After 1h, the solution was cooled with gentle stirring to room temperature. The set was weighed, and an amount of deionized water was added to correct the initial value of the solution as measured before heating.

After preparing the modified or unmodified cassava starch solution at a concentration of 10% (m/m), a plasticizer was added at concentrations of 20% on a mass basis in relation to the mass of modified or unmodified starch. The concentration of the plasticizer was related to the amount of modified or unmodified cassava starch, for example, to the 10% modified or unmodified cassava starch solution (30g) with 20% plasticizer, an amount of 6 g of plasticizer was added, after cooling the solution. After adding the plasticizer, all solutions were homogenized for 5 min. A transparent solution with the appearance of glue was obtained, which was identified as AM10/GOH20, where: AM10 = final concentration of the mass of modified or unmodified cassava starch in the solution (10% m/m) and GOH20 = final concentration of plasticizer in the solution in relation to the initial mass of modified or unmodified starch (20% m/m).

Preparation of modified or unmodified starch solution + microfibrillated cellulose (MFC)

Three formulations of modified or non-modified cassava starch incorporated with MFC at concentrations of 1, 2, and 3% on a mass basis (m/m) in relation to the total mass of the formulation were prepared. The water mass of the MFC suspension was subtracted from the total water mass of the formulation (300 g). For example, for 1%, 175 g of deionized water was added to a 500 mL beaker, along with 30 g of modified or unmodified starch (without prior drying) and 75 g of MFC suspension, where 72 g corresponded to water and 3 g microfibrillated cellulose. The set was placed under constant stirring for 5 min for homogenization at room temperature. The mixture was heated to 80-85 °C and maintained under heating with intense stirring for one hour to effect solubilization of the modified or unmodified starch. A water bath with a plasticizer was used throughout the process. After 1h, the solution was cooled with gentle stirring to room temperature. The set was weighed, and an amount of deionized water was added to correct the initial value of the concentrations. Then, 6 g of plasticizer was added, and the mixture was stirred for 5 min for homogenization.

The solutions were identified as AM10/GOH20/MFC1 where: AM10 = final mass concentration of modified or unmodified cassava starch in the solution (10% m/m); GOH20 = final concentration of plasticizer in the solution in relation to the mass of modified or unmodified cassava starch (20% m/m); MFC1, MCF2 and MCF3 = MFC concentration in relation to the total mass of the solution (1% m/m, 2% m/m and 3% m/m, respectively). Table 1 summarizes the composition of all formulations containing MFC produced in this experimental stage.

| Table 1: Composition of modified or unmodified starch/MFC formulations used in coating BOPP and LLDPE films. | | | | |
|---|---|---|---|---|
| Formulation | Modified or unmodified starch (%) | Plasticizer$_{starch}$ (%) | MFC (%)* | MFC$_{starch}$ (%)** |
| AM10/GOH20 | 10 | 20 | 0 | 0 |
| AM10/GOH20/ MFC1 | 10 | 20 | 1 | 10 |
| AM10/GOH20 /MFC2 | 10 | 20 | 2 | 20 |
| AM10/GOH20/ MFC3 | 10 | 20 | 3 | 30 |

Preparation of modified or unmodified starch solution + microfibrillated cellulose (MFC) + montmorillonite (MMT).
Two formulations of modified or unmodified cassava starch with MFC were prepared and amounts of MMT were added at concentrations of 1 and 2% on a mass basis (m/m) in relation to the total mass of modified or unmodified starch in the formulation, adding 0.1g for every 10g of modified or unmodified starch in 1% solutions and 0.2g for solutions containing 2% MMT.
Initially, the amount of MMT was added to 50ml of distilled water in a beaker and maintained under an ultrasonic sonicator tip for 15 minutes at 60% of the total power of the equipment.
Then, the set containing modified or unmodified starch (10%), MFC (2%), and MMT was placed under constant stirring for 5 min for homogenization at room temperature. The mixture was heated to 80-85 °C and maintained under heating with intense stirring for one hour and kept under gentle stirring without heating, until the set is cooled to room temperature, and the plasticizer was added, then the mixture was stirred for 5 min for homogenization.
The solutions were identified as AM10/GOH20/MFC2/MMT1 and AM10/GOH20/MFC2/MMT2, Figure 22, where MMT1 and MMT2 correspond to the amounts of 1 and 2% of MMT in the samples and are presented in table 2.

| Table 2: Composition of modified or unmodified starch/MFC/MMT formulations used in coating BOPP and LLDPE films | | | | |
|---|---|---|---|---|
| Formulation | Modified or unmodified starch (%) | Plasticizer$_{starch}$ (%) | MFC (%) | MMT$_{starch}$ (%) |
| AM10/GOH20/ MFC2/MMT1 | 10 | 20 | 2 | 1 |
| AM10/GOH20 /MFC2/MMT2 | 10 | 20 | 2 | 2 |

Another two examples of modified or unmodified starch formulations, with MFC, were prepared. According to Figure 22, the first formulation contained 4.0 g of modified or unmodified starch, 1.0 g of MFC, 0.4 g of glycerol, and 94.6 g of water, that is, 25% by weight of MFC in relation to the mass of modified or unmodified starch.

According to Figure 23, the second formulation contained 2.0 g of modified or unmodified starch, 0.5 g of MFC, 0.2 g of glycerol, and 97.3 g of water, that is, 25% by weight of MFC in relation to the mass of modified or unmodified starch.

Coating of plastic films by continuous casting

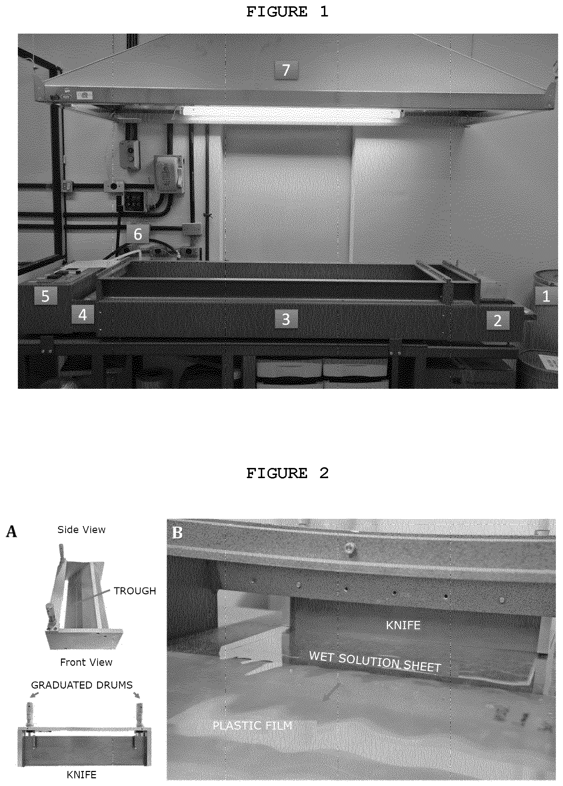

BOPP and LLDPE plastic films were coated with modified or unmodified starch/MFC and modified or unmodified starch/MFC/MMT formulations using a pilot Table Topp Tape Caster (TTC) lamination unit shown in Figure 1. The basic principle of operation of the TTC unit is the lamination of a solvent formulation onto a mobile substrate, which is driven at a predetermined speed through a drying zone composed of a heated metal base and warm air convection.

The steps for coating LLDPE and BOPP plastic films with modified or unmodified starch and MFC solutions are described below:

Figure 2 illustrates the lamination device of the TTC pilot unit, showing the following views: (A) Side and front view of the lamination device, highlighting the trough, lamination knife, and graduated drums, and (B) Illustration of the formation of the wet sheet of modified or unmodified starch + MFC solution on the mobile plastic substrate (BOPP and LLDPE).

The steps for coating LLDPE and BOPP plastic films with modified or unmodified starch and MFC solutions are described below:

1st STEP - Lamination of modified or unmodified starch + MFC formulations: The TTC unit was fed with modified or unmodified starch + MFC formulations into the trough of the laminating device, where they were spread over the BOPP or LLDPE film using a lamination knife (Figure 2). For the film coating process, an amount of formulation sufficient to cover a width of approximately 25 cm of film by a length of roughly 140 cm was added to the knife trough. The coating deposition speed was set at three mm/s (12 cm/min), initially at a thickness of 0.05 mm and subsequently at thicknesses of 0.02 mm and 0.01 mm. The wet sheet is formed by dragging the solution contained in the trough due to the movement of the plastic film (substrate). Coating tests were performed by standardizing the speed at 2 mm s-1 (7.2 m h-1). The wet sheet showed good spreading over LLDPE and BOPP films for all deposition thicknesses and showed no failures before the drying process.

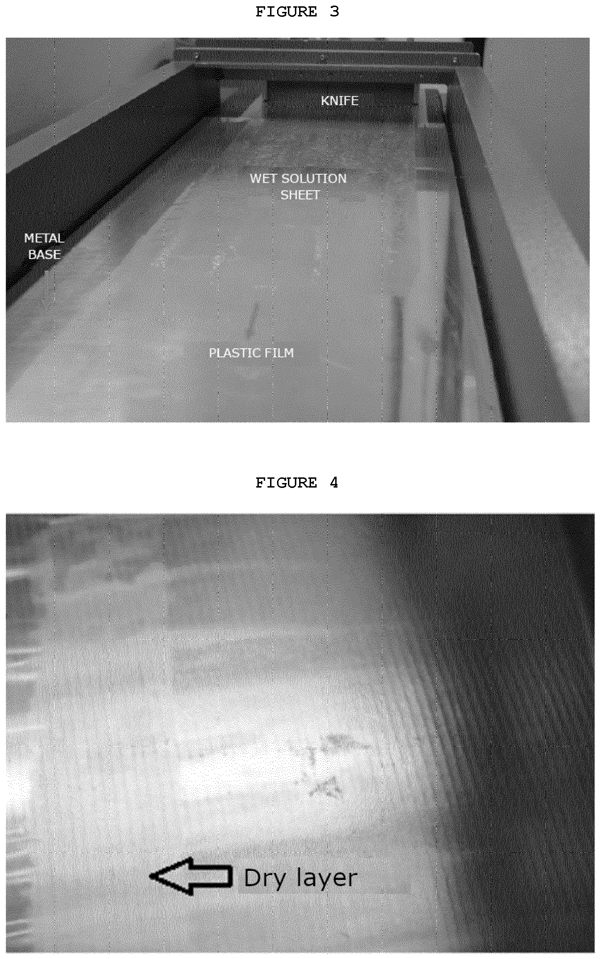

2nd STAGE - Continuous drying of the wet sheet of the modified or unmodified starch/MFC formulation: The wet sheet was transported through a drying zone composed of a metal base heated by electrical resistances and a warm air convection system (Figure 3). In all cases, metal base and air stream temperatures were adjusted to 40 °C (non-MFC formulation) and 50 °C (MFC formulations). In this case, water was eliminated by heating the wet sheet in contact with the metal base and by forced convection of warm air, forming a thin layer of modified or unmodified starch + MFC on the plastic film. The residence time of the wet sheet in the drying zone is defined by the plastic film-pulling speed.

Figure 3 illustrates the drying image of the wet sheet of modified or unmodified starch solution and MFC in the TTC pilot unit.

Regarding the formulations containing MFC, the coating process was efficient, not causing deposition defects or failures in the wet sheet (Figure 4). The drying process did not cause contraction in the BOPP and LLDPE films, as shown for the samples with AM10/GOH20.

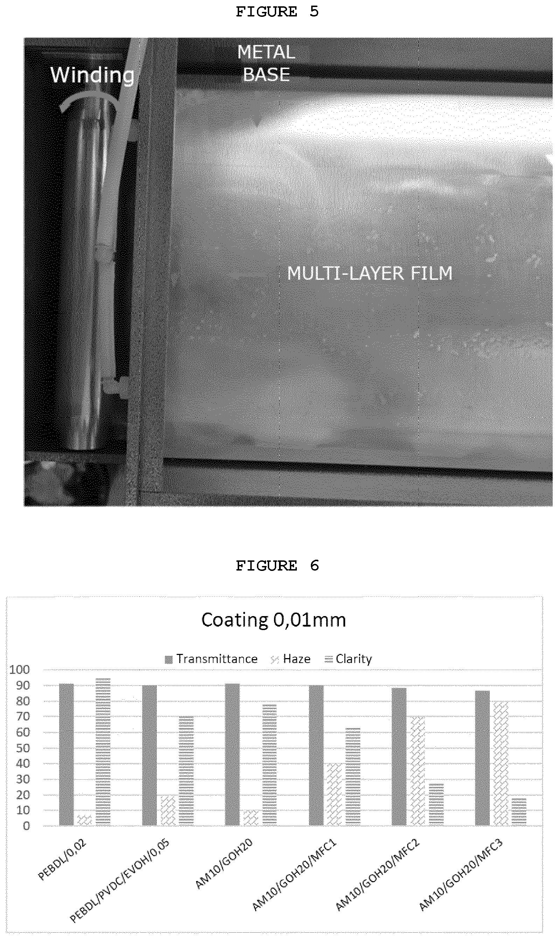

3rd STAGE - Winding of the plastic film coated with modified or unmodified starch/MFC: After complete drying of the wet sheet, the coated plastic film (multi-layer film) was wound on the final mandrel of the TTC unit (Figure 5). After drying, the films were stored in plastic packaging and conditioned under controlled temperature and humidity (25°C and 54% relative humidity) to perform characterization tests of the mechanical properties. Optical properties were determined from the unconditioned sample. The samples were identified as described in Table 1.

Based on the process described above, 12 sets of samples divided into four different groups were prepared, as described in table 4.

Table 4. Multi-layer films produced from modified or unmodified starch/MFC coatings.

| Sample | Substrate | Modified or unmodified starch (%) | MFC (%) | Wet sheet thickness (mm) | °C |
|---|---|---|---|---|---|
| LLDPE/AM10/GOH20/ 0.01/40 | LLDPE | 10 | 0 | 0.01 | 40 |

(continued)

| Sample | Substrate | Modified or unmodified starch (%) | MFC (%) | Wet sheet thickness (mm) | °C |
|---|---|---|---|---|---|
| LLDPE/AM10/GOH20/ 0.02/40 | LLDPE | 10 | 0 | 0.02 | 40 |
| LLDPE/AM10/GOH20/ 0.05/40 | LLDPE | 10 | 0 | 0.05 | 40 |
| LLDPE/AM10/GOH20/ MFC1/0.01/50 | LLDPE | 10 | 1 | 0.01 | 50 |
| LLDPE/AM10/GOH20/ MFC1/0.02/50 | LLDPE | 10 | 1 | 0.02 | 50 |
| LLDPE/AM10/GOH20/ MFC1/0.05/50 | LLDPE | 10 | 1 | 0.05 | 50 |
| LLDPE/AM10/GOH20/ MFC2/0.01/50 | LLDPE | 10 | 2 | 0.01 | 50 |
| LLDPE/AM10/GOH20/ MFC2/0.02/50 | LLDPE | 10 | 2 | 0.02 | 50 |
| LLDPE/AM10/GOH20/ MFC2/0.05/50 | LLDPE | 10 | 2 | 0.05 | 50 |
| LLDPE/AM10/GOH20/ MFC3/0.01/50 | LLDPE | 10 | 3 | 0.01 | 50 |
| LLDPE/AM10/GOH20/ MFC3/0.02/50 | LLDPE | 10 | 3 | 0.02 | 50 |
| LLDPE/AM10/GOH20/ MFC3/0.05/50 | LLDPE | 10 | 3 | 0.05 | 50 |
| BOPP/AM10/GOH20/ MFC1/0.01/50 | BOPP | 10 | 1 | 0.01 | 50 |
| BOPP/AM10/GOH20/ MFC1/0.02/50 | BOPP | 10 | 1 | 0.02 | 50 |
| BOPP/AM10/GOH20/ MFC1/0.05/50 | BOPP | 10 | 1 | 0.05 | 50 |
| BOPP/AM10/GOH20/ MFC2/0.01/50 | BOPP | 10 | 2 | 0.01 | 50 |
| BOPP/AM10/GOH20/ MFC2/0.02/50 | BOPP | 10 | 2 | 0.02 | 50 |
| BOPP/AM10/GOH20/ MFC2/0.05/50 | BOPP | 10 | 2 | 0.05 | 50 |
| BOPP/AM10/GOH20/ MFC3/0.01/50 | BOPP | 10 | 3 | 0.01 | 50 |
| BOPP/AM10/GOH20/ MFC3/0.02/50 | BOPP | 10 | 3 | 0.02 | 50 |
| BOPP/AM10/GOH20/ MFC3/0.05/50 | BOPP | 10 | 3 | 0.05 | 50 |
| BOPP/AM10/GOH20/ MFC2/MMT1/0.02/50 | BOPP | 10 | 2 | 0.02 | 50 |
| LLDPE/AM10/GOH20/ MFC2/MMT1/0.02/50 | LLDPE | 10 | 2 | 0.02 | 50 |

(continued)

| Sample | Substrate | Modified or unmodified starch (%) | MFC (%) | Wet sheet thickness (mm) | °C |
|---|---|---|---|---|---|
| BOPP/AM10/GOH20/ MFC2/MMT2/0.02/50 | BOPP | 10 | 2 | 0.02 | 50 |
| LLDPE/AM10/GOH20/ MFC2/MMT2/0.02/50 | LLDPE | 10 | 2 | 0.02 | 50 |

Determination of optical properties

In order to determine the optical properties, the films were cut into square specimens of 50 mm on each side, without surface defects, according to ASTM D 1003-07. The tests were performed with eight repetitions from 4 measurements on two independent specimens using a BYK Gardner equipment, model Haze-Gard Plus, at room temperature after calibration. Transmittance (T, %), Haze (H, %), and clarity (C, %) values were determined. The T parameter is the total percentage of light directly passing through the sample in relation to the incident light beam and it is related to the complete transparency of the sample. The H parameter is defined as the percentage of light that passes through the sample with a deviation greater than 2.5° and it is related to the loss of contrast. The C parameter is the percentage of light passing through the sample with a deviation of less than 2.5° and it is associated with the ability to see minute details through the sample.

Uniaxial tensile tests

To carry out the uniaxial tensile tests on the obtained films, a universal testing machine from the Instron brand, model 5569, was used for tensile, compression, bending, and creep tests. The specimens were made with a rotary knife cutter for tape-type specimens with dimensions of 24mm in width, 100mm in length, and thickness varying according to the layer deposited on the polymeric substrate. All specimens were conditioned for at least 48 hours before starting the tests in an environment with relative humidity and controlled temperature (50% RH and 25°C). The tests were carried out under conditions described in the ASTM D882 standard using a stretching speed of 10 mm/min. It was possible to determine the following mechanical properties of the films; modulus of elasticity, tension at yield, ultimate strength at rupture, and deformation at yield and at break.

Scanning Electron Microscopy

The morphology of the coated film samples was analyzed by scanning electron microscopy using an electronic microscope FEI model S50. The magnification of the micrographs ranged from 250 to 10,000 times, where the samples' surfaces were analyzed to evaluate the dispersion of MFC and MMT and the adhesion of the deposited layers.

Barrier Properties to $O_2$

Oxygen permeability rate

Oxygen permeability rates - $TPO_2$ were determined by the coulometric method, according to the procedure described in the ASTM D 3985 (2017) standard, in OXTRAN equipment, model 2/22, from MOCON, operating with pure oxygen as permeant gas. The tests were carried out at 23°C dry and the conditioning of the specimens at 23°C and dry (dehumidified environment with silica gel) for a minimum of 48 hours. The effective permeation area of each specimen was 5 $cm^2$. The results were corrected for 1 atm oxygen partial pressure gradient between the two film surfaces. This gradient corresponds to the driving force for oxygen permeation through the film.

Once the $TPO_2$ was determined, the oxygen permeability coefficient ($PO_2$) was calculated from the permeability rate as follows:

$$PO_2 = TPO_2.e/p$$

where:

$PO_2$ = oxygen permeability coefficient (mL(CNTP). mm. m$^{-2}$. dia-1. atm-1)

$TPO_2$ = oxygen permeability rate (mL(CNTP). m$^{-2}$. dia-1)

e = average specimen thickness (mm)

p = partial pressure of oxygen in the permeant gas chamber of the diffusion cell, since the partial pressure of $O_2$ in the carrier gas chamber ($N_2$ + $H_2$) is considered zero.

RESULTS OBTAINED

OPTICAL PROPERTIES

The optical properties of all films obtained after the deposition of modified or unmodified starch/plasticizer/MFC layers with thickness variations and MFC concentrations were evaluated. The evaluated properties were transmittance, haze, and clarity. They were compared with the properties of pure LLDPE and BOPP films and with a multi-layer high-barrier LLDPE/PVDC/EVOH film with a thickness of 50 $\mu$m.

The visual appearance of the LLDPE film coated with the AM10/GOH20, AM10/GOH20/MFC, and AM10/GOH20/MFC/MMT formulations for different wet sheet thicknesses (0.01, 0.02, and 0.05 mm) and concentrations of MFC are illustrated in Figures 28 - 30. In general, none of the formulations made the LLDPE film opaque. The films ranged from highly transparent to slightly translucent with increasing MFC concentration and wet sheet thickness applied to the LLDPE film.

The visual appearance of the BOPP film coated with AM10/GOH20, and AM10/GOH20/MFC formulations for different wet sheet thicknesses (0.01, 0.02, and 0.05 mm) and MFC concentrations were evaluated. Similar to the trend observed for LLDPE, none of the formulations made the BOPP film opaque. There was only a slight loss of transparency, the MFC concentration increased and the thickness of the wet sheet applied to the film increased.

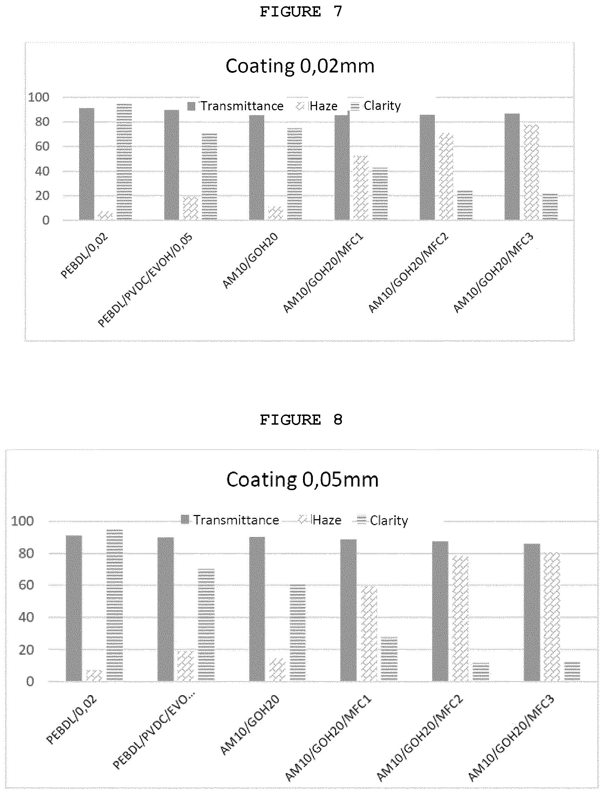

In general, LLDPE-based multi-layer films show good homogeneity and adhesion with modified or unmodified starch/MFC layers depending on the corona treatment applied to the LLDPE film. Figures 6-8 show the effect of the wet sheet thickness of modified or unmodified starch/MFC formulation with different concentrations of MFC on the Transmittance (T), Haze (H), and Clarity (C) of the LLDPE film. LLDPE/PVDC/EVOH film optical parameters were also included for comparison purposes. All data are summarized in table 5.

The optical parameters of the standard LLDPE (uncoated) were: T = 91.0 $\pm$ 0.1%, H = 7.2 $\pm$ 0.3%, and C = 94.7 $\pm$ 0.1%. The LLDPE/EVOH/PVDC high barrier film parameters were: T = 90.0 $\pm$ 0.1%, H = 19.0 $\pm$ 0.1%, and C = 70.2 $\pm$ 0.5%. As seen in Figure 18, after coating with the AM10/GOH formulation, the parameters were changed to T = 91.1 $\pm$ 0.1%, H = 10.0 $\pm$ 0.4%, and C = 77.4 $\pm$ 1.8% for the lowest wet sheet thickness (0.01 mm) and T = 90.3 $\pm$ 0.4%, H = 14.7 $\pm$ 0.7% and C = 60.6 $\pm$ 0.6% for the highest wet sheet thickness (0.05 mm). Thus, the only effect observed is the loss of clarity compared to the standard LLDPE film. On the other hand, the clarity parameter for the multi-layer film obtained from the highest wet sheet thickness value was quite similar to that of the LLDPE/EVOH/PVDC high barrier film. This indicates that the loss of clarity is not an obstacle for applications that require better $O_2$ barrier film.

Figures 6-8 also show the effect of coating with the AM10/GOH/MFC formulation on the optical parameters of the LLDPE film. Considering the coating with the formulation containing the lowest concentration of MFC (1%) and the lowest wet sheet thickness (0.01 mm), the parameters were T = 89.9 $\pm$ 0.1 %, H = 40.1 $\pm$ 0.5%, and C = 62.7 $\pm$ 1.2%. In comparison, for the highest concentration of MFC (3%) and the highest wet sheet thickness (0.05 mm), the parameters were T = 85.9 $\pm$ 0 .1%, H = 80.8 $\pm$ 0.9%, and C = 12.7 $\pm$ 0.3%. There is a considerable increase in the Haze parameter of almost 70% when the highest concentration of MFC is used. The results show that this increase in the haze was independent of the applied wet blade thickness. Haze values for the 1% and 2% MFC concentrations were 40 and 80% in all cases.

Therefore, it is possible to state that there was a loss of optical quality of the LLDPE film coated with MFC. On the other hand, only the haze parameter of the films coated with modified or unmodified starch/MFC in a high concentration of MFC (3%) was lower than that of the LLDPE/EVOH/PVDC high barrier film. This indicates that if the films coated with 1 and 2% MFC present barrier properties close to those of the LLDPE/EVOH/PVDC film, there will be no obstacles to the application of the multi-layer films developed in this experimental stage in terms of optical quality.

Table 5 shows the Optical Parameters of LLDPE and BOPP films coated with modified or unmodified starch, MFC, and MMT.

| Sample | T (%) | H (%) | C (%) |
|---|---|---|---|
| LLDPE/AM10/GOH20/0.01/40 | 91.1 $\pm$ 0.06 | 10.1 $\pm$ 0.38 | 77.4 $\pm$ 1.76 |

(continued)

| Sample | T (%) | H (%) | C (%) |
|---|---|---|---|
| LLDPE/AM10/GOH20/0.02/40 | 90.1 ± 1.27 | 11.3 ± 0.46 | 74.4 ± 1.44 |
| LLDPE/AM10/GOH20/0.05/40 | 90.3 ± 0.35 | 14.7 ± 0.69 | 60.6 ± 0.56 |
| LLDPE/AM10/GOH20/MFC1/0.01/50 | 89.8 ± 0.06 | 40.1 ± 0.52 | 62.7 ± 1.20 |
| LLDPE/AM10/GOH20/MFC1/0.02/50 | 89.1 ± 0.10 | 52.2 ± 0.20 | 43.1 ± 0.56 |
| LLDPE/AM10/GOH20/MFC1/0.05/50 | 88.9 ± 0.00 | 59.5 ± 0.87 | 27.9 ± 0.91 |
| LLDPE/AM10/GOH20/MFC2/0.01/50 | 88.3 ± 0.10 | 69.7 ± 0.40 | 27.3 ± 0.40 |
| LLDPE/AM10/GOH20/MFC2/0.02/50 | 88.0 ± 0.06 | 70.8 ± 0.84 | 24.6 ± 0.55 |
| LLDPE/AM10/GOH20/MFC2/0.05/50 | 87.6 ± 0.06 | 78.6 ± 0.67 | 11.8 ± 0.00 |
| LLDPE/AM10/GOH20/MFC3/0.01/50 | 86.5 ± 0.06 | 79.5 ± 0.21 | 18.0 ± 0.12 |
| LLDPE/AM10/GOH20/MFC3/0.02/50 | 86.7 ± 0.17 | 77.8 ± 0.90 | 21.7 ± 0.44 |
| LLDPE/AM10/GOH20/MFC3/0.05/50 | 85.9 ± 0.06 | 80.8 ± 0.86 | 12.7 ± 0.31 |
| BOPP/AM10/GOH20/MFC1/0.01/50 | 88.0 ± 0.06 | 57.3 ± 0.35 | 40.4 ± 0.06 |
| BOPP/AM10/GOH20/MFC1/0.02/50 | 88.0 ± 0.06 | 58.2 ± 0.42 | 36.9 ± 1.23 |
| BOPP/AM10/GOH20/MFC1/0.05/50 | 87.3 ± 0.17 | 65.9 ± 0.75 | 21.8 ± 0.56 |
| BOPP/AM10/GOH20/MFC2/0.01/50 | 85.5 ± 0.10 | 72.5 ± 1.24 | 26.6 ± 1.70 |
| BOPP/AM10/GOH20/MFC2/0.02/50 | 85.5 ± 0.10 | 73.1 ± 0.38 | 24.1 ± 1.06 |
| BOPP/AM10/GOH20/MFC2/0.05/50 | 82.5 ± 0.59 | 79.6 ± 1.10 | 13.8 ± 0.15 |
| BOPP/AM10/GOH20/MFC3/0.01/50 | 86.3 ± 0.21 | 78.8 ± 0.21 | 24.0 ± 0.76 |
| BOPP/AM10/GOH20/MFC3/0.02/50 | 82.5 ± 0.10 | 82.8 ± 0.61 | 14.5 ± 0.17 |
| BOPP/AM10/GOH20/MFC3/0.05/50 | 81.9 ± 0.06 | 83.0 ± 1.40 | 13.0 ± 0.47 |
| LLDPE/AM10/MFC2/MMT1/0.02/50 | 87.0 ± 0.00 | 72.7 ± 0.46 | 13.2 ± 0.06 |
| LLDPE/AM10/MFC2/MMT2/0.02/50 | 86.9 ± 0.06 | 74.4 ± 0.40 | 15.3 ± 0.06 |
| BOPP/AM10/MFC2/MMT1/0.02/50 | 87.4 ± 0.24 | 74.4 ± 0.44 | 15.0 ± 0.36 |
| BOPP/AM10/MFC2/MMT2/0.02/50 | 87.8 ± 0.00 | 73.6 ± 0.50 | 15.7 ± 0.17 |

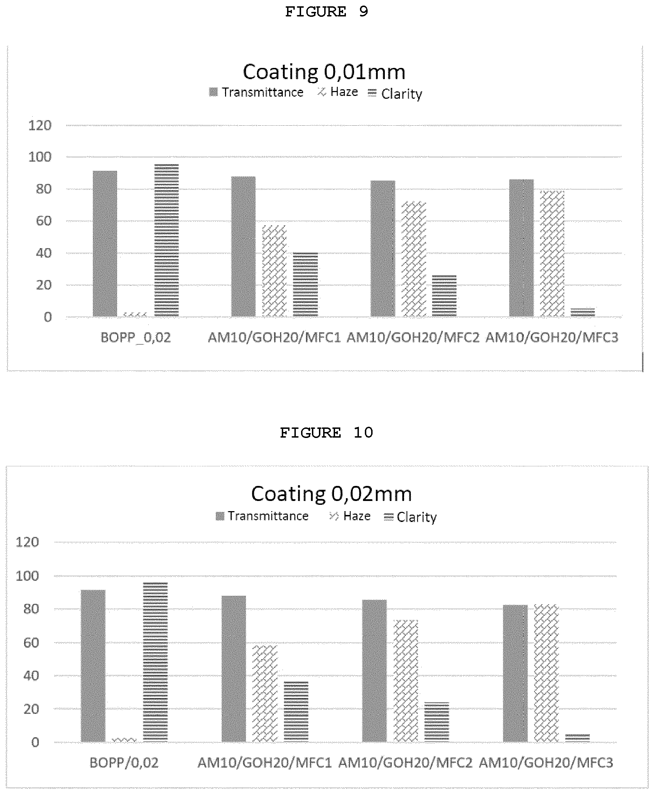

Figures 9-11 present transmittances (T), haze (H), and clarity (C) data for the standard BOPP film and after coating with modified or unmodified starch/MFC formulations. The optical parameters of the standard BOPP (uncoated) were T = 92.0 ± 0.1%, H = 3.6 ± 0.2%, and C = 97.6 ± 0.1%. After coating with the AM10/GOH20/MFC1 formulation, the parameters were T = 88.0 ± 0.1%, H = 57.3 ± 0.4%, and C = 40.4 ± 0.1% for the thickness of the wet blade of 0.01 mm. The parameters for the thickest thickness (0.05 mm) were T = 87.3 ± 0.2%, H = 65.9 ± 0.8%, and C = 21.8 ± 0.6%.

The coating of the BOPP film with the AM10/GOH20/MFC3 formulation, that is, containing the highest concentration of MFC (3%), resulted in the parameters T = 86.3 ± 0.2 %, H = 78.8 ± 0,2%, and C = 24.0 ± 0.8% for a wet sheet thickness of 0.01 mm. The parameters for the highest thickness (0.05 mm) were T = 81.9 ± 0.1%, H = 83.0 ± 0.8%, and C = 13.0 ± 0.5%.

It is possible to observe the slight variation of T with increasing wet sheet thickness, particularly compared to standard BOPP. On the other hand, there is a gradual increase in H and a decrease in C with increasing wet sheet thickness and MFC concentration in the coating formulation. This means that coating BOPP with MFC leads to a loss of contrast and sharpness.

Figures 9-11 illustrate the distribution of Transmittance, Haze, and Clarity properties of BOPP/0.02 films coated with AM10/GOH20 and AM10/GOH20/MFC at a thickness of (a) 0.01mm (b) 0.02 mm (c) 0.05 mm.

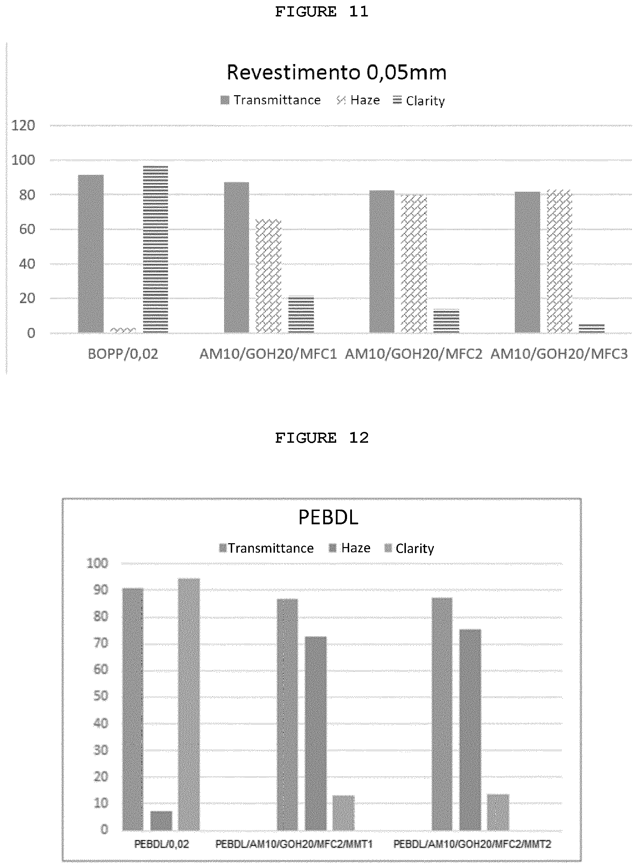

Figure 12 shows the distribution of Transmittance, Haze, and Clarity properties of LLDPE/0.02 films coated with AM10/GOH20/MFC2/MMT1 and MMT2 at a thickness of 0.02 mm. (a) LLDPE/0.02, (b)MMT1 and (c)MMT2.

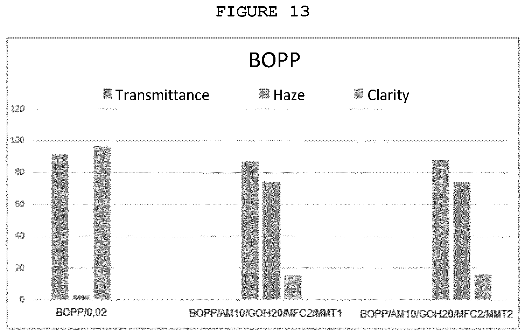

Figure 13 illustrates the distribution of Transmittance, Haze, and Clarity properties of BOPP/0.02 films coated with AM10/GOH20/MFC2/MMT1 and MMT2 at a thickness of 0.02 mm. (a)BOPP/0.02, (b)MMT1 and (c)MMT2.

Films coated with MMT formulations showed similar optical properties to those containing only MFC. The values obtained for transmittance (T) were higher in the samples with MMT for both coated polyolefins, as well as there was no sharp decrease in the values of haze (H) and clarity (C), with the films coated with MMT presenting lower values in these last two cases.

MECHANICAL PROPERTIES

The uniaxial tensile tests were performed under conditions described in the ASTM D882 standard. All specimens were conditioned for at least 48 hours before starting the tests in an environment of relative humidity and controlled temperature (50% RH and 25°C).

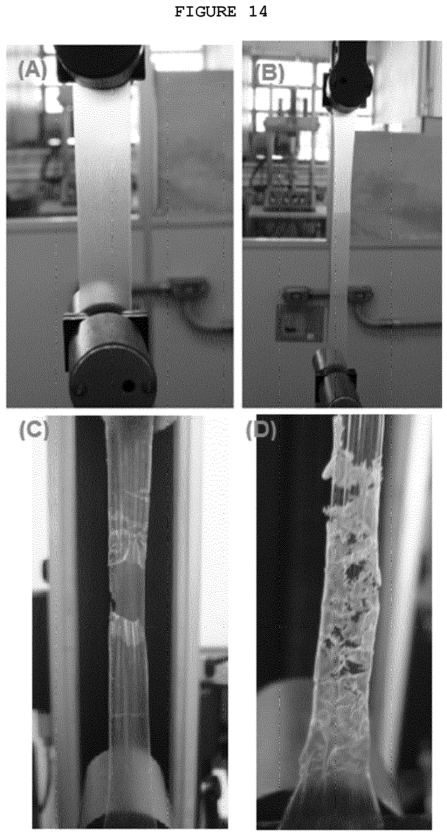

Figure 14 illustrates specimens during uniaxial tensile testing.

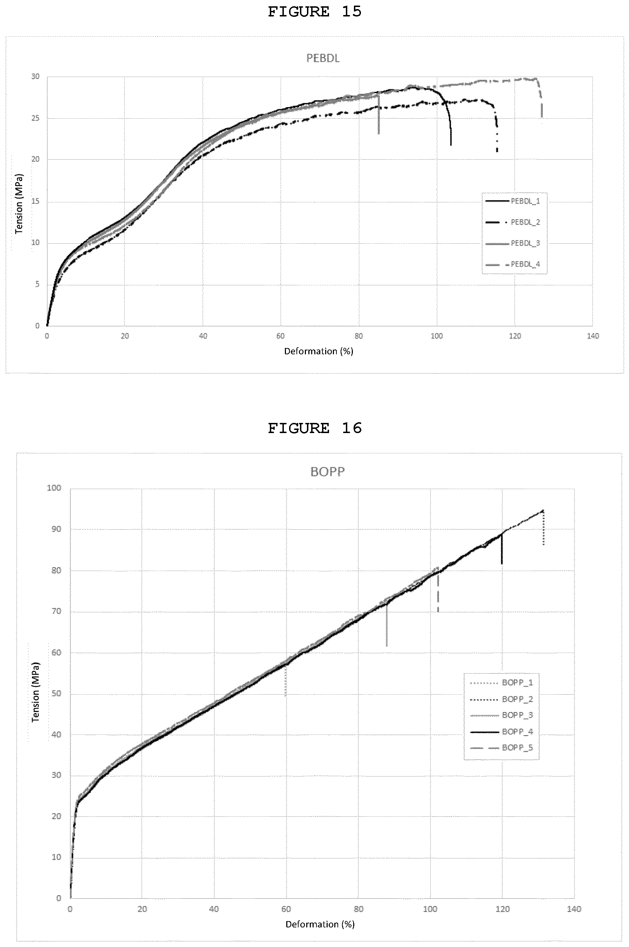

Figure 15 illustrates Tension x Deformation curves for LLDPE/0.02 mm samples and presents different specimens during the tensile tests, in which an ideal behavior can be observed in (A) and (B), where the MFC layer deposited on the plastic film shows good adhesion and uniform deformation during the test. For (C) and (D), the deposited layers detached from the film surface when subjected to tensile tension. The films that showed this behavior were discarded, and their data were not used in the statistical study of the tests.

Table 6. Data on the mechanical properties of coated LLDPE films.

| Sample | Modulus of Elasticity (E) GPa | Drain Voltage ($\sigma$) MPa | Elongation in Flow (%) | Breaking tensile strength ($\sigma$) MPa | Elongation at Break (%) |
|---|---|---|---|---|---|
| LLDPE/0.02 | 0.17 ± 0.06 | 10.55 ± 0.91 | 2.36 ± 0.44 | 28.15 ± 0.98 | 107.56 ± 16.31 |
| LLDPE/AM10/GOH20/0.01 | 0.20 ± 0.04 | 7.10 ± 0.05 | 1.33 ± 0.03 | 19.35 ± 0.14 | 101.54 ± 1.03 |
| LLDPE/AM10/GOH20/0.02 | 0.36 ± 0.01 | 10.40 ± 0.29 | 0.89 ± 0.11 | 21.76 ± 0.35 | 78.36 ± 0.58 |
| LLDPE/AM10/GOH20/0.05 | 0.38 ± 0.05 | 8.50 ± 0.38 | 1.00 ± 0.16 | 18.87 ± 0.81 | 68.20 ± 7.53 |
| LLDPE/AM10/GOH20/MFC1/0.01 | 0.16 ± 0.13 | 9.30 ± 0.36 | 3.72 ± 0.45 | 21.29 ± 0.43 | 97.46 ± 9.09 |
| LLDPE/AM10/GOH20/MFC1/0.02 | 0.22 ± 0.02 | 9.20 ± 1.00 | 2.50 ± 0.50 | 17.95 ± 1.36 | 122.52 ± 1.58 |
| LLDPE/AM10/GOH20/MFC1/0.05 | 0.37 ± 0.03 | 10.60 ± 0.19 | 1.12 ± 0.12 | 17.11 ± 0.66 | 109.74 ± 12.56 |
| LLDPE/AM10/GOH20/MFC2/0.01 | 0.34 ± 0.02 | 11.61 ± 0.47 | 0.89 ± 0.14 | 22.42 ± 0.75 | 109.83 ± 4.73 |
| LLDPE/AM10/GOH20/MFC2/0.02 | 0.29 ± 0.01 | 10.54 ± 1.17 | 0.93 ± 0.02 | 19.97 ± 0.53 | 113.53 ± 8.83 |
| LLDPE/AM10/GOH20/MFC2/0.05 | 0.24 ± 0.74 | 11.07 ± 0.43 | 0.87 ± 0.16 | 16.73 ± 0.29 | 103.75 ± 8.94 |
| LLDPE/AM10/GOH20/MFC3/0.01 | 0.46 ± 0.03 | 12.27 ± 0.31 | 0.83 ± 0.13 | 19.26 ± 0.61 | 101.91 ± 13.18 |
| LLDPE/AM10/GOH20/MFC3/0.02 | 0.46 ± 0.01 | 10.29 ± 0.30 | 0.90 ± 0.37 | 15.99 ± 0.38 | 125.70 ± 0.64 |
| LLDPE/AM10/GOH20/MFC3/0.05 | 0.66 ± 0.04 | 11.85 ± 0.27 | 1.12 ± 0.03 | 15.31 ± 0.62 | 124.8 ± 3.49 |
| LLDPE/AM10/GOH20/MFC2/MMT1/0.02 | 0.18 ± 0.08 | 9.19 ± 0.98 | 17.16 ± 1.54 | 17.78 ± 0.51 | 102.93 ± 4.06 |

(continued)

| Sample | Modulus of Elasticity (E) GPa | Drain Voltage ($\sigma$) MPa | Elongation in Flow (%) | Breaking tensile strength ($\sigma$) MPa | Elongation at Break (%) |
|---|---|---|---|---|---|
| LLDPE/AM10/GOH20/MFC2/MMT2/0.02 | 0.31 ± 0.14 | 10.52 ± 0.70 | 20.56 ± 3.66 | 19.28 ± 0.58 | 120.84 ± 14.89 |

Figure 16 illustrates Tension x Deformation curves for BOPP/0.02mm samples.

Table 7. Data on the mechanical properties of coated BOPP films.

| Sample | Modulus of Elasticity (E) GPa | Drain Voltage ($\sigma$) MPa | Elongation in Flow (%) | Tensile strength at break ($\sigma$) MPa | Elongation at Break (%) |
|---|---|---|---|---|---|
| BOPP/0.02 | 1.03 ± 0.07 | 24.54 ± 0.33 | 1.35 ± 0.13 | 88.80 ± 5.71 | 119.92 ± 16.79 |
| BOPP/AM10/GOH20/MFC1/0.01 | 0.97 ± 0.97 | 19.20 ± 1.01 | 1.32 ± 0.05 | 75.93 ± 3.98 | 165.53 ± 12.27 |
| BOPP/AM10/GOH20/MFC1/0.02 | 1.30 ± 0.12 | 18.52 ± 0.60 | 1.11 ± 0.10 | 68.35 ± 7.23 | 166.25 ± 11.52 |
| BOPP/AM10/GOH20/MFC1/0.05 | 1.57 ± 0.13 | 18.29 ± 0.74 | 0.99 ± 0.09 | 60.28 ± 4.94 | 171.15 ± 4.64 |
| BOPP/AM10/GOH20/MFC2/0.01 | 1.54 ± 0.11 | 21.37 ± 1.35 | 1.14 ± 0.09 | 77.69 ± 1.85 | 157.84 ± 2.57 |
| BOPP/AM10/GOH20/MFC2/0.02 | 1.43 ± 0.06 | 29.94 ± 0.56 | 1.27 ± 0.10 | 70.35 ± 5.75 | 165.04 ± 1.86 |
| BOPP/AM10/GOH20/MFC2/0.05 | 1.66 ± 0.01 | 30.19 ± 0.63 | 1.29 ± 0.08 | 67.67 ± 2.78 | 169.07 ± 10.8 |
| BOPP/AM10/GOH20/MFC3/0.01 | 1.86 ± 0.17 | 33.08 ± 0.88 | 1.02 ± 0.09 | 80.48 ± 2.04 | 159.89 ± 3.69 |
| BOPP/AM10/GOH20/MFC3/0.02 | 1.33 ± 0.06 | 26.95 ± 0.73 | 1.21 ± 0.08 | 62.87 ± 1.35 | 161.11 ± 5.35 |
| BOPP/AM10/GOH20/MFC3/0.05 | 1.41 ± 0.12 | 26.35 ± 0.40 | 1.12 ± 0.07 | 60.73 ± 1.35 | 169.13 ± 4.16 |
| BOPP/AM10/GOH20/MFC2/MMT1/0.02 | 1.05 ± 0.03 | 18.22 ± 0.33 | 3.42 ± 0.09 | 64.89 ± 1.24 | 152.52 ± 4.89 |
| BOPP/AM10/GOH20/MFC2/MMT2/0.02 | 1.16 ± 0.03 | 21.13 ± 0.61 | 3.41 ± 0.27 | 56.79 ± 1.14 | 135.74 ± 4.18 |

Adding the coating layer only with modified or unmodified starch solution effectively increased the modulus of elasticity when compared to pure LLDPE. This behavior can also be observed in MFC samples, being more expressive in the MFC3/0.05 sample for the LLDPE coated films and MFC2/0.05mm and in MFC3/0.01mm for BOPP. The application of MMT did not show significant gains for both concentrations and substrates.

The flow stress showed levels close to those observed in pure LLDPE in the MFC1/0.05mm, MFC2/0.02mm samples, being higher for the MFC2/0.01mm, MFC2/0.05mm, and MFC3/0.01mm samples. For samples containing MMT, only MMT2/0.02mm showed values close to those of pure LLDPE. For the BOPP films, the samples from MFC2/0.02mm to MFC3/0.05mm all showed higher values than those of the pure substrate for yield tension, with the values obtained in the samples of MFC1, MFC/0.01mm, and MMT lower than the of pure BOPP.

Few samples showed higher values than the pure substrate for flow elongation. For samples containing MFC in the formulation, only the MFC1/0.01mm and MFC1/0.02mm samples showed higher results than the value of 2.36 $\pm$ 0.44 for LLDPE/0.02mm, being 3.72 $\pm$ 0.45 for MFC1/0.01mm and 2.50 $\pm$ 0.50 for MFC1/0.02mm. Regarding BOPP/0.02mm, only MFC1/0.01mm, MFC2/0.02mm, and MFC2/0.05mm showed similar values to the pure substrate. The other samples showed lower values for flow elongation.

The values obtained in the MMT samples in LLDPE were 7.3 and 8.1 times higher in relation to the LLDPE/0.02mm for MMT1 and MMT2, respectively, and also showed results superior by 2.5 times to the pure substrate in the samples of BOPP coated. This suggests that the application of MMT in the coating of plastic films can contribute to the increase of this property in an expressive way.

All samples showed lower values than pure substrates in relation to the tension at rupture, with samples MFC2/0.01mm for LLDPE and MFC3/0.01mm for BOPP showing the highest values for this property in coated films.

Samples containing MFC showed higher values for elongation at break in LLDPE films. Only MFC1/0.01 showed lower values than those observed in the pure substrate. For coated BOPP films, all samples showed values higher than BOPP/0.02mm, with films with coating layers at a thickness of 0.05mm showing the highest values, which suggests a more significant coating layer and the percentage of MFC can contribute to the gains of this property.

SCANNING ELECTRON MICROSCOPY - SEM

Figures 17-21 show the micrographs obtained for the samples of BOPP and LLDPE coated with AM/MFC and MMT.

Figure 17 shows micrographs of BOPP/AM10/GOH20/MFC where (A)MFC 1%, (B)MFC 2%, and (C) MFC 3%.

Figure 18 shows LLDPE/AM10/GOH20/MFC micrographs where (A)MFC 1%, (B)MFC 2%, and (C) MFC 3%.

Figures 17 and 18 show the surfaces for BOPP and LLDPE films, respectively, coated with AM10/GOH20/MFC, with the percentages of MFC varying from 1 to 3% as observed in (A), (B), and (C).

Figure 19 shows cross-sectional micrographs of the LLDPE/AM10/GOH20/MFC fracture where (A)MFC 2% and (B) MFC 3%.

Figure 20 shows LLDPE/AM10/GOH20/MFC2/MMT micrographs where (A)MMT 1% and (B) 2%.

Figure 20 shows micrographs obtained for samples coated with AM/GOH/MFC/MMT suspension. It can be seen that all formulations showed good dispersion of MFC, as shown in Figures 17, 18, and 20, and good adhesion to the substrate, as shown in Figure 19, with no occurrence of surface defects such as failures in the coating or agglomeration of MFC and MMT, where it is possible to observe that the addition of MMT to the formulations did not compromise the adhesion of the coating to the substrate and, also, it did not show failures along the sample, being its effective deposition as well as the formulations previously tested without its addition. The highlighted points detail the presence of MMT on the surface of the coating. These particles were identified and quantified using the Energy Dispersive Spectroscopy - EDS technique and scanning electron microscopy, shown in Figure 21.

Figure 21 presents Energy Dispersive Spectroscopy - EDS results for AM/GOH/MFC/MMT sample for quantification of MMT in the coating layer.

$O_2$ BARRIER PROPERTIES

Table 8. $O_2$ permeability rates (TP $O_2$) at 23°C, dry, and 1atm $O_2$ partial pressure gradient.

| | $TPO_2$(mL(CNPT).m$^{-2}$.dia$^{-1}$) . (film thickness) | | |
|---|---|---|---|
| SAMPLE | AVERAGE | VARIATION INTERVAL | COEFFICIENT OF VARIATION (%) |
| LLDPE | 9491.4 | 8.557.5<br>9.925.3<br>9.991.4 | 8.5 |
| LLDPE_MFC | 5.4 | 4.6<br>6.2 | 21.0 |
| LLDPE_MFC_MMT | 0.53 | 0.6<br>0.6<br>0.4 | 22.0 |
| BOPP | 2224.4 | 1.668.6<br>2.780.2 | 35.3 |

(continued)

| | TPO$_2$(mL(CNPT).m$^{-2}$.dia$^{-1}$) . (film thickness) | | |
|---|---|---|---|
| SAMPLE | AVERAGE | VARIATION INTERVAL | COEFFICIENT OF VARIATION (%) |
| BOPP_MFC | 2.3 | 2.2 2.4 | 6.1 |
| BOPP_MFC_MMT | 0.40 | 0.4 0.4 | 0 |

Table 9. O$_2$ permeability coefficient (PO$_2$) at 23°C to.

| | PO$_2$(mL(CNPT)mm.m$^{-2}$.dia$^{-1}$.atm$^{--1}$) | | |
|---|---|---|---|
| SAMPLE | AVERAGE | VARIATION INTERVAL | COEFFICIENT OF VARIATION (%) |
| LLDPE | 229.4 | 212.2 232.2 243.8 | 7.0 |
| LLDPE_MFC | 0.2 | 0.17 0.23 | 19.5 |
| LLDPE_MFC_MMT | 0.023 | 0.026 0.026 0.016 | 23.9 |
| BOPP | 47.6 | 35.37 59.77 | 36.3 |
| BOPP_MFC | 0.1 | 0.1 0.1 | 5.7 |
| BOPP_MFC_MMT | 0.017 | 0.017 0.018 | 4.9 |

Samples coated with MFC showed TPO$_2$ lower results than the values obtained for pure LLDPE by approximately 1750 times and 960 times for BOPP samples. With the addition of MMT clay, these values are reduced even more. Since TPO$_2$ does not consider the thickness of the sample, but only the amount of O$_2$ that permeates throughout it, the permeability coefficient - PO$_2$ should be used to more accurately compare the effectiveness of the MFC barrier property compared to pure substrates. It is observed that the presented values make these films competitive in this property with samples of metallized BOPP and BOPET, which can be considered an excellent result.

In this way, it is demonstrated that the adhesion between polymeric substrates of PP and PE through the deposition of layers of modified or unmodified starch solution and later drying of the deposited layer, provided that the deposition takes place on the surface that has received corona treatment, is advantageous. However, it was noticed that the presence of plasticizer in the modified or unmodified starch solution favors the dispersion and adhesion of the layer in concentrations between 15 and 20%.

Using MFC and MMT together with the modified or unmodified starch solution did not compromise the dispersion of the solution on the substrate. However, in the samples containing limited or unmodified starch and MFC failures occurred during the drying process, where the uniformity of the layer and the adhesion to substrates were affected.

Regarding the samples from Group (III), the deposition of a new layer containing MFC showed better conditions of dispersion and uniformity concerning the samples from Group (II), and it did not change for the samples from the same group containing MMT, however, after drying the layers of modified or unmodified starch (Group (I)) were impaired in terms of adhesion to the substrate.

The drying temperature did not influence on the uniformity and adhesion of the layers deposited later.

The solubilization of cassava starch in mixtures containing varying amounts of microfibrillated cellulose was effective, so that all mixtures showed good homogenization of modified or unmodified starch, without presenting undissolved lumps, in addition to good dispersion of microfibrils.

For the deposition process of the mixtures on the substrates with the aid of the knife, they all presented satisfactory dispersion conditions, so that they did not present surface defects on the wet sheet. The addition of MMT in the formulations did not compromise the adhesion process of the material deposited on the substrates.

Regarding the drying process, the samples AM10/GOH20 and AM10/GOH20/MFC1 did not show consistent behavior during the process, with sample AM10/GOH20 showing some surface defects after drying due to the contraction of the set at a temperature of 40°C. Sample AM10/GOH20/MFC1 showed acceptable behavior at 40°C, however, at 50°C the set was prone to behave in the same way as the set free of microfibrillated cellulose in its composition. However, it did not show surface defects after the drying process.

The other samples showed acceptable behavior at 50°C, which suggests that microfibrillated cellulose in more significant quantities in the mixtures may be more effective for drying at temperatures above 40°C.

The optical properties of the samples containing microfibrillated cellulose, as well as those containing MFC and MMT, showed satisfactory transmittance levels when compared to the levels of the materials. However, for the levels of haze and clarity, it can be observed that the levels of microfibrils in the samples directly influence the increase of haze, and, consequently, the decrease in clarity levels, and the added amount of MMT did not compromise any of these properties.

For the coated LLDPE samples, the tensile tests showed a great influence of the application of MFC in the coating layers. It was possible to observe the increase in the resistance of the films to deformation in the elastic region, that is, an increase in the elasticity modulus or Young's modulus was observed. This gain in the mechanical properties of the films was proportionally increasing according to the increase in the percentage of MFC in the coating layer, with the LLDPE/AM10/GOH20/MFC3/0.05 sample having the highest value for the modulus of elasticity in relation to LLDPE/0.02. It is also possible to observe the increase in flow tension for films containing MFC, with the LLDPE/AM10/GOH20/MFC2/0.01 sample having the highest value for this mechanical property. Regarding the tensile strength limit at rupture, all samples containing MFC and MMT showed values lower than LLDPE/0.02, with samples with a thickness of 0.01mm, which presented higher tension values for the coated samples. Regarding elongation, the MFC3 samples with thicknesses of 0.02mm and 0.05mm showed the highest values for elongation at yield and elongation at rupture, respectively.

BOPP samples also showed the influence of MFC concerning mechanical properties when coated. For the tensile strength values at rupture, the samples showed, on average, a 22.3% reduction in the values obtained for the pure BOPP sample. The samples with the highest values were coated with a thickness of 0.01 mm for all MFC application conditions, such as MFC1, MFC2, and MFC3.

The modulus of elasticity obtained significant gains of up to 80.6% concerning the modulus of elasticity of the pure BOPP sample. The sample with the highest value was MFC3, with a thickness of 0.01mm. The lowest value obtained was for MFC1 with 0.01mm, with a reduction of 5.83% compared to the value of the original sample.

For the levels of elongation in yielding and rupture, the data obtained were superior concerning the original sample for both cases, with the samples MFC2/0.02mm and MFC1/0.05mm showing the highest values for elongation in yielding and rupture, respectively.

The addition of MMT in the formulations showed good mechanical properties only for modulus of elasticity in all LLDPE and BOPP samples containing 2% MMT. Samples with 1% presented modulus of elasticity values lower than those obtained for pure polyolefin samples. However, for both formulations (1 and 2%), the strength at rupture values were lower than those obtained in uncoated LLDPE and BOPP.

The micrographs obtained prove the excellent adhesion of the coatings for all proposed formulations, where all showed good dispersion of MFC and MMT throughout the samples, without showing failures of coating or aggregation of the components of the formulation.

Coatings containing MFC or MFC+MMT showed excellent $O_2$ barrier performance. The results indicate competitiveness in this regard with metallized BOPP and BOPET films.

**Claims**

1. A BARRIER COMPOSITION **characterized in that** it comprises at least one starch, 10-30% by weight of plasticizer, in relation to the mass of starch and 1.1-25.0% by weight of MFC, in relation to the mass of starch.

2. A BARRIER COMPOSITION, according to claim 1, **characterized in that** it comprises 1.1-3.9% by weight of MFC, in relation to the mass of starch.

3. A BARRIER COMPOSITION, according to claim 1, **characterized in that** it comprises 0.1-5.0% by weight of clay, in relation to the mass of starch, selected from bentonite, halloysite, vermiculite, kaolin, aluminosilicates, and montmorillonite, preferably montmorillonite.

**4.** A BARRIER COMPOSITION, according to claim 1, **characterized in that** it comprises 75-90% by weight of starch, in relation to the total mass of the composition, 9-22.4% by weight of a plasticizer, in relation to the total mass of the composition and 0.9-2.9% by weight of MFC, in relation to the total mass of the composition.

**5.** A BARRIER COMPOSITION, according to claim 4, **characterized in that** it comprises 0.9-1.5% by weight of clay, in relation to the total mass of the composition, selected from bentonite, halloysite, vermiculite, kaolin, aluminosilicates, and montmorillonite, preferably montmorillonite.

**6.** A BARRIER COMPOSITION, according to claim 5, **characterized in that** the plasticizer is selected from glycerol, 1-ethyl 3-methylimidazolium acetate, sorbitol, triethylene glycol, glucose, urea, mate extract, diethyl phthalate, n,n bis (2-hydroxyethyl) formamide, poly(vinyl alcohol), xylitol, or mixtures thereof, preferably glycerol.

**7.** A BARRIER COMPOSITION, according to any one of claims 1 to 6, **characterized in that** the starch is modified or unmodified starch.

**8.** Use of a BARRIER COMPOSITION, according to claim 1, **characterized in that** it is in a multi-layer structure.

**9.** METHOD OF PRODUCING A BARRIER COMPOSITION, **characterized in that** it comprises:

A) providing an aqueous dispersion of starch, plasticizer, and MFC comprising 10-20% by weight of starch, based on the total mass of solution, 0.9-4.7% by weight of plasticizer, based on the total mass of solution and 1.0-3.1% by weight of MFC based on the total mass of solution;
b1) homogenizing the aqueous dispersion of starch, plasticizer, and MFC by stirring;
b2) heating the aqueous dispersion of starch, plasticizer, and MFC to 80-85°C for 1 hour;
c) cooling the aqueous dispersion of starch, plasticizer, and MFC under stirring to room temperature;
d) optionally, adding water to correct the initial value of the solution as measured before heating.

**10.** METHOD OF PRODUCING A BARRIER COMPOSITION, according to claim 6, **characterized in that** the steps b1) of homogenizing the aqueous dispersion of starch, plasticizer, and MFC by stirring and b2) of heating the aqueous dispersion of starch, plasticizer, and MFC between 80-85°C for 1h occur concurrently.

**11.** METHOD OF PRODUCING A BARRIER COMPOSITION, according to claim 6, **characterized in that** the added MFC is in the form of a pre-dispersion of MFC in water.

**12.** METHOD OF PRODUCING A BARRIER COMPOSITION, according to claim 6, **characterized in that** step a) further comprises 0.1-5% of clay, preferably montmorillonite.

**13.** The METHOD, according to claim 9, **characterized in that** the plasticizer is selected from glycerol, 1-ethyl 3-methylimidazolium acetate, sorbitol, triethylene glycol, glucose, urea, mate extract, diethyl phthalate, n,n bis (2 - hydroxyethyl) formamide, poly(vinyl alcohol), xylitol, or mixtures thereof, preferably glycerol.

**14.** The METHOD, according to any one of claims 9 to 13, **characterized in that** the starch is modified or unmodified starch.

**15.** A MULTI-LAYER STRUCTURE COMPRISING A BARRIER COMPOSITION, **characterized in that** it comprises:

a) a carrier layer selected from the group consisting of polymers, composites, metals, alloys, glass, silicon, ceramics, wood, and paper; and
b) a layer of starch-, plasticizer- and MFC-based barrier composition disposed on at least a portion of the first layer, wherein the barrier composition comprises:

i. a starch,
ii. a plasticizer, and
iii. an MFC.

**16.** A MULTI-LAYER STRUCTURE COMPRISING A BARRIER COMPOSITION, according to claim 15, **characterized in that** the barrier composition comprises 70-90% by weight of starch, 1-30% by weight of plasticizer, in relation to the mass of starch and 0.1-10% by weight of MFC, in relation to the mass of starch.

17. A MULTI-LAYER STRUCTURE COMPRISING A BARRIER COMPOSITION, according to claim 15, **characterized in that** the barrier composition further comprises 0.1-5% of clay, preferably montmorillonite.

18. A MULTI-LAYER STRUCTURE COMPRISING A BARRIER COMPOSITION, according to claim 15, **characterized in that** the carrier layer comprises a LLDPE, a PP, a LDPE, a LLDPE, HDPE, PA, PET, PLA, PBT, PBS, PBSA, PCL, PHB, PHBV, their blends, composites, and nanocomposites.

19. The STRUCTURE, according to claim 15, **characterized in that** the plasticizer is selected from glycerol, 1-ethyl 3-methylimidazolium acetate, sorbitol, triethylene glycol, glucose, urea, mate extract, diethyl phthalate, n,n bis (2 - hydroxyethyl) formamide, poly(vinyl alcohol), xylitol, or mixtures thereof, preferably glycerol.

20. The STRUCTURE, according to any one of claims 15 to 19, **characterized in that** the starch is modified or unmodified starch.

21. Use of a multi-layer structure, according to claim 15, **characterized in that** it is in a package.

22. METHOD OF PRODUCING A MULTI-LAYER STRUCTURE, **characterized in that** it comprises a barrier composition comprising:

> a) providing a carrier layer selected from the group consisting of polymers, composites, metals, alloys, glass, silicon, ceramics, wood, and paper; and
> b) depositing on the face of the carrier layer, a layer of starch-, plasticizer- and MFC-based barrier composition, arranged in at least a portion of the first layer, in which the barrier composition comprises:

>> i. a starch,
>> ii. a plasticizer and
>> ii. an MFC

> c) drying the multi-layer, resulting in a multi-layer structure.

23. METHOD OF PRODUCING A MULTI-LAYER STRUCTURE, according to claim 22, **characterized in that** the layer of starch-, plasticizer- and MFC-based barrier composition further comprises a clay, preferably montmorillonite.

24. METHOD OF PRODUCING A MULTI-LAYER STRUCTURE, according to claim 22, **characterized in that** the barrier composition comprises 75-90% by weight of starch, in relation to the total mass of the composition, 9-22.4% by weight of plasticizer, in relation to the total mass of the composition, and 0.9-2.0% MFC by weight, in relation to the total mass of the composition.

25. METHOD OF PRODUCING A MULTI-LAYER STRUCTURE, according to claim 22, **characterized in that** the barrier composition further comprises a clay, preferably montmorillonite, in relation to the total mass of the composition.

26. METHOD OF PRODUCING A MULTI-LAYER STRUCTURE, according to claim 22, **characterized in that** the face of the carrier layer is subjected to a corona treatment before deposition, on the face of the carrier layer with corona treatment, a layer of starch-, plasticizer- and MFC- based barrier composition.

27. METHOD OF PRODUCING A MULTI-LAYER STRUCTURE, according to claim 22, **characterized in that** the deposit of the barrier composition on the carrier layer is carried out by extrusion, co-extrusion, lamination, lamination combined with extrusion, coating, and/or deposition of layers from solutions or suspensions in a liquid medium (coatings), rotogravure and flexography and, preferably, continuous casting coating is used.

28. The METHOD, according to claim 22, **characterized in that** the plasticizer is selected from glycerol, 1-ethyl 3-methylimidazolium acetate, sorbitol, triethylene glycol, glucose, urea, mate extract, diethyl phthalate, n,n bis (2-hydroxyethyl) formamide, poly(vinyl alcohol), xylitol, or mixtures thereof, preferably glycerol.

29. The METHOD, according to any one of claims 22 to 28, **characterized in that** the starch is modified or unmodified starch.

30. LOW $O_2$ PERMEABILITY STRUCTURE COMPRISING TWO OR MORE LAYERS, **characterized in that** at least one of the layers is a layer comprising an $O_2$ permeation barrier composition comprising a starch, plasticizer, and an MFC.

31. LOW $O_2$ PERMEABILITY STRUCTURE COMPRISING TWO OR MORE LAYERS, according to claim 30, **characterized in that** at least one of the layers comprises an $O_2$ permeation barrier composition comprising a starch, plasticizer, and an MFC and it further comprises a clay, preferably montmorillonite.

32. The STRUCTURE, according to claim 30 and 31, **characterized in that** the plasticizer is selected from glycerol, 1-ethyl 3-methylimidazolium acetate, sorbitol, triethylene glycol, glucose, urea, mate extract, diethyl phthalate, n,n bis (2-hydroxyethyl) formamide, poly(vinyl alcohol), xylitol, or mixtures thereof, preferably glycerol.

33. The STRUCTURE, according to any one of claims 30 to 32, **characterized in that** the starch is modified or unmodified starch.

FIGURE 1

FIGURE 2

FIGURE 3

FIGURE 4

FIGURE 5

FIGURE 6

FIGURE 7

Coating 0,02mm

FIGURE 8

Coating 0,05mm

FIGURE 9

Coating 0,01mm

FIGURE 10

Coating 0,02mm

FIGURE 11

Revestimento 0,05mm

■ Transmittance  ▨ Haze  ☰ Clarity

FIGURE 12

PEBDL

■ Transmittance  ■ Haze  ■ Clarity

FIGURE 13

FIGURE 14

FIGURE 15

FIGURE 16

FIGURE 17

FIGURE 18

FIGURE 19

FIGURE 20

FIGURE 21

| Element | Mass (%) |
|---|---|
| C | 85.14 |
| O | 13.50 |
| Na | 0.25 |
| Al | 0.75 |
| Ca | 0.36 |
| Total | 100.00 |

FIGURE 22

4,0g Starch
1,0g MFC
0,4g Glycerol
94,6g Water

FIGURE 23

2,0g Starch
0,5g MFC
0,2g Glycerol
97,3g Water

## INTERNATIONAL SEARCH REPORT

| International application No. |
| --- |
| PCT/BR2021/050319 |

| A. CLASSIFICATION OF SUBJECT MATTER |
| --- |
| **IPC: C08J 7/048 (2006.1) , C08J 5/18 (2006.01), C08L 3/00 (2006.01), C09D 101/02 (2006.01), C09D 103/02 (2006.01), B32B 27/12 (2006.01), D21H 19/34 (2006.1)**<br>**CPC: C08J 7/048, C08L 3/00, C08L 2201/14, B32B 2262/062, B32B 2307/7244, B32B 2255/10, C09D 101/02**<br>According to International Patent Classification (IPC) or to both national classification and IPC |

| B. FIELDS SEARCHED |
| --- |
| Minimum documentation searched (classification system followed by classification symbols)<br><br>**C08J 7/048, C08L 3/00, C09D 101/00, B32B 2307/7244, D21H 19/00** |
| Documentation searched other than minimum documentation to the extent that such documents are included in the fields searched<br>**Banco de Patentes Brasileiro INPI-Br, Google Acadêmico** |
| Electronic data base consulted during the international search (name of data base and, where practicable, search terms used)<br><br>**Google Patents, Derwent Innovation** |

| C. DOCUMENTS CONSIDERED TO BE RELEVANT | | |
| --- | --- | --- |
| Category* | Citation of document, with indication, where appropriate, of the relevant passages | Relevant to claim No. |
| X<br><br>Y | LENGOWSKI, E. C. Formação e caracterização de filmes com nanocelulose. 2016. 232 f. Dissertação (Doutorado em Engenharia Florestal) - Setor de Ciências Agrárias - Faculdade Federal do Paraná, Curitiba, PR, 2016.<br>The whole document | 1-2, 4, 6-14<br><br>3, 5, 24 |
| X<br><br>Y | MARQUES, G. S. Obtenção de filmes biodegradáveis de amido de mandioca reforçados com nanofibras de celulose de rami. Dissertação (Mestrado) -Universidade Federal do Paraná, Curitiba, 2018.<br>The whole document | 1-2, 4, 6-14<br><br>3, 5, 24 |
| X | EP 3025857 B1 (TOPPAN PRINTING CO LTD [JP])<br><br>06 JUN 2018 (06.06.2018)<br>The whole document | 15-16, 18, 19-23, 26-30, 32-33 |

| ☒ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br><br>29 OCT 2021 (29.10.2021) | Date of mailing of the international search report<br><br>12 NOV 2021 (12.11.2021) |
| --- | --- |
| Name and mailing address of the ISA/<br><br>ISA/BR<br>Facsimile No. | Authorized officer<br><br><br>Telephone No. |

Form PCT/ISA/210 (second sheet) (January 2015)

**INTERNATIONAL SEARCH REPORT**

| International application No. |
|---|
| PCT/BR2021/050319 |

C (Continuation). DOCUMENTS CONSIDERED TO BE RELEVANT

| Category* | Citation of document, with indication, where appropriate, of the relevant passages | Relevant to claim No. |
|---|---|---|
| X | BR 112013011629 A2 (IMERYS MINERALS LTD [GB]) | 15-16, 19-33 |
| Y | 16 AUG 2016 (16.08.2016) | 3, 5, 17 |
| | The whole document | 24 |
| | ------------------------------------------- | |
| A | US 2018245287 A1 (STORA ENSO OYJ [FI]) | 1 to 33 |
| | 30 AUG 2018 (30.08.2018) | |
| | The whole document | |
| | ------------------------------------------- | |
| A | US 2018319143 A1 (TETRA LAVAL HOLDINGS FINANCE [CH]) | 1 to 33 |
| | 08 NOV 2018 (08.11.2018) | |
| | The whole document | |
| | ------------------------------------------- | |
| A | US 2019091982 A1 (STORA ENSO OYJ [FI]) | 1 to 33 |
| | 29 MAR 2019 (28.03.2019) | |
| | The whole document | |
| | ------------------------------------------- | |

Form PCT/ISA/210 (continuation of second sheet) (January 2015)

**INTERNATIONAL SEARCH REPORT**
Information on patent family members

| International application No. |
| --- |
| PCT/BR2021/050319 |

| | | | |
| --- | --- | --- | --- |
| EP 3025857 B1 | 2018-06-06 | EP 3025857 A1 | 2016-06-01 |
| | | CN 105392625 A | 2016-03-09 |
| | | JP WO2015011899 A1 | 2017-03-02 |
| | | JP 6418158 B2 | 2018-11-07 |
| | | US 2016130056 A1 | 2016-05-12 |
| BR 112013011629 A2 | 2016-08-16 | None | |
| US 2018245287 A1 | 2018-08-30 | US 10577747 B2 | 2020-03-03 |
| | | BR 112018005366 A2 | 2018-10-09 |
| | | CA 2995437 A1 | 2017-03-23 |
| | | CN 108026696 A | 2018-05-11 |
| | | EP 3350369 A1 | 2018-07-25 |
| | | JP 2018527483 A | 2018-09-20 |
| | | JP 6869232 B2 | 2021-05-12 |
| US 2018319143 A1 | 2018-11-08 | US 10576721 B2 | 2020-03-03 |
| | | BR 112018003571 A2 | 2018-09-25 |
| | | CN 108472937 A | 2018-08-31 |
| | | EP 3368306 A1 | 2018-09-05 |
| | | JP 2018533499 A | 2018-11-15 |
| | | JP 6773775 B2 | 2020-10-21 |
| | | WO 2017072124 A1 | 2017-05-04 |
| US 2019091982 A1 | 2019-03-28 | US 11084261 B2 | 2021-08-10 |
| | | BR 112018069061 A2 | 2019-01-29 |
| | | CA 3016116 A1 | 2017-09-28 |
| | | CN 108778726 A | 2018-11-09 |
| | | EP 3433099 A1 | 2019-01-30 |
| | | JP 2019512412 A | 2019-05-16 |
| | | SE 1650380 A1 | 2017-09-23 |
| | | SE 539754 C2 | 2017-11-14 |
| | | WO 2017163167 A1 | 2017-09-28 |
| | | ZA 201805574 B | 2019-06-26 |

Form PCT/ISA/210 (patent family annex) (January 2015)

**REFERENCES CITED IN THE DESCRIPTION**

**Patent documents cited in the description**

- WO 2017163167 A

- US 20190234020 A